# EUROPÄISCHE PATENTSCHRIFT

(11) **EP 3 237 572 B1**
(45) Veröffentlichungstag und Bekanntmachung des Hinweises auf die Patenterteilung: **27.03.2019**
(21) Anmeldenummer: 15817862.4
(22) Anmeldetag: 23.12.2015
(51) Int. Cl.: C09K 8/035, A01N 37/00, C09K 8/60, C09K 8/68, C09K 8/90

(54) **VERFAHREN MIT ANWENDUNG EINES PROZESSFLUIDS MIT UMWELTVERTRÄGLICHEM BIOSTABILISATOR**
METHOD APPLYING A PROCESS FLUID WITH ENVIRONMENTALLY FRIENDLY BIOSTABILISATOR
PROCEDE UTILISANT UN FLUIDE DE TRAITEMENT CONTENANT UN BIOSTABILISATEUR ÉCOLOGIQUE

(30) Priorität: 23.12.2014 EP 14199961
(43) Veröffentlichungstag der Anmeldung: 01.11.2017
(60) Teilanmeldung: 19151827.3
(73) Patentinhaber: Agrana Beteiligungs- Aktiengesellschaft, 1020 Wien (AT)
(72) Erfinder: EMERSTORFER, Florian, 1030 Wien (AT); OMANN, Markus, 1020 Wien (AT); MARIHART, Johann, 3721 Limberg (AT); WASTYN, Marnik Michel, 2320 Schwechat (AT)
(74) Vertreter: Sonn & Partner Patentanwälte
(86) Internationale Anmeldenummer: PCT/EP2015/081135
(87) Internationale Veröffentlichungsnummer: WO 2016/102654

(56) Entgegenhaltungen:
- EP-A2- 1 496 096
- WO-A1-91/19771
- WO-A2-2014/200671
- US-A- 5 807 812
- US-A1- 2003 015 480
- US-A1- 2013 029 884
- US-B1- 6 849 581

## Beschreibung

Die Erfindung betrifft ein Verfahren mit Anwendung eines Prozessfluids mit einem umweltverträglichen Biostabilisator, zur großtechnischen Verwendung in der Erdkruste, bevorzugt zur Verwendung in der Erdöl- und Erdgasförderung, insbesondere im Hydraulic Fracturing.

Das Innere der Erdkruste ist besiedelt bzw. besiedelbar von unzähligen Arten von Mikroorganismen, sowohl im Erdboden als auch in darunter liegenden geologischen Formationen. Viele dieser Mikroorganismen können durch ihr Wachstum bzw. ihren Stoffwechsel großtechnische Prozesse in der Erdkruste, insbesondere bei Bohrungen nach bzw. Förderungen von z.B. Wasser, Erdöl, Erdgas, erschweren oder gar verunmöglichen; d.h. es handelt sich dabei um "unerwünschte Mikroorganismen". Beispielsweise können unerwünschte Mikroorganismen durch ihre Stoffwechselprodukte die Korrosion von Leitungsrohren und anderer Ausrüstung aus Metall begünstigen und durch Schleimbildung (d.h. Bildung extrazellulärer polymerer Substanzen) bzw. Bewuchs ("Biofilme") Leitungen verstopfen. Dies wird auch als "Biofouling" bezeichnet. Außerdem können sich unerwünschte Mikroorganismen in einem Prozessfluid ohne Biostabilisator anreichern und Ökosysteme bzw. den Menschen gefährden, wenn jenes Prozessfluid aus der kontrollierten Umgebung in die Umwelt austreten sollte.

Aus diesen und anderen Gründen werden oft Biozide oder Biostabilisatoren (auch Biostate oder Biostatika genannt) gegen unerwünschte Mikroorganismen eingesetzt.

Insbesondere in der Förderung von fossilen Brennstoffen wie Erdöl und Erdgas werden Biozide oder Biostabilisatoren eingesetzt, weil unerwünschte Mikroorganismen beispielsweise den zu fördernden Brennstoff durch ihre Stoffwechselprodukte (z.B. Sulfide) verunreinigen können ("souring"). Unerwünschte Mikroorganismen können die Ausbeute an fossilen Brennstoffen verringern. Besonders beim Hydraulic Fracturing ist es wichtig, unerwünschte Mikroorganismen unter Kontrolle zu halten. Zu diesem Zweck wurden beispielsweise bereits die folgenden Biozide entwickelt:
Die WO 2012/012158 A2 offenbart Biostat/Biozid-Kombinationen, z.B. ein voll substituiertes Butenolid als Biostat zusammen mit einem Isothiazolon als Biozid.

Die WO 2010/138420 A2 offenbart Zwei-Komponenten-Biozide, mit Glutaraldehyd als einer der beiden Komponenten.

Die WO 2012/125890 A2 beschäftigt sich mit der kontrollierten Freisetzung von Bioziden.

Die WO 2014/165813 A1 beschäftigt sich mit einem Verfahren unter Verwendung von Bioziden als Zwei-Komponenten-System.

Die WO 2013/123104 A1 beschreibt den Einsatz eines oxidierend wirkenden Biozids.

Struchtemeyer et al. evaluieren bekannte Biozide auf ihre Wirksamkeit gegen *Desulfovibrio desulfuricans* und ein kultiviertes Isolat aus der Schiefergasförderung.

Die US 2013/0029884 A1 offenbart Biozide v.a. auf Basis von Chlorxylenol, die auch bei hohen Salzkonzentrationen und hohen Temperaturen wirksam sein sollen. Eine in Wasser unlösliche Fettsäure, Kaliumricinolsäure, wird als bevorzugtes Tensid in einer Zusammensetzung mit dem Biozid offenbart (vgl. Absatz [0039], 1. Satz des Dokuments). Der Fettsäure wird im Dokument jedoch keine biozide oder biostabilisierende Wirkung zugeschrieben, sondern sie dient gemäß der Offenbarung lediglich der Verbesserung der Löslichkeit des Biozids (vgl. Absatz [0040] des Dokuments).

Üblicherweise werden in großtechnischen Prozessen in der Erdkruste, insbesondere in der Erdöl- und Erdgasförderung, also aggressive Biozide wie beispielsweise Glutaraldehyd verwendet, welche schädlich für Mensch und Umwelt sind. Jenes Problem ist erkannt worden, so beschreiben z.B. Ashraf et al. umweltverträgliche Biozide ("green biocides") im Allgemeinen. Insbesondere offenbaren die folgenden Veröffentlichungen Alternativen zu herkömmlichen Bioziden zum Einsatz in der Erdöl- und Erdgasförderung:
Die WO 2014/085697 A1 offenbart biozidale Silbernanopartikel, die ins Bohrloch gepumpt werden können.

Die WO 2012/135427 A1 beschreibt ein biozidales Verfahren auf der Grundlage von spezifischen Bakteriophagen.

Die WO 2012/149560 A2 offenbart Chitosan als Biozid in der Förderung von fossilen Brennstoffen. Chitosan wird als biokompatibel dargestellt.

Allerdings weisen solche alternativen Biozide im Stand der Technik einen oder mehrere Nachteile auf, beispielsweise: höhere Kosten, geringere Wirksamkeit, insbesondere unter den Bedingungen, die in der Erdkruste herrschen können (z.B. höhere Temperaturen), und bei vielen, insbesondere thermophilen Mikroorganismen, und Komplexität in der Anwendung (beispielsweise bei Bakteriophagen). Außerdem handelt es sich dabei größtenteils immer noch um Biozide und nicht um Biostabilisatoren, was ungeklärte Auswirkungen auf Ökosysteme haben kann. Des Weiteren ist es vorteilhaft, möglichst viele verschiedene, insbesondere auch umweltverträgliche, Biozide bzw. Biostabilisatoren zur Verfügung zu haben, um insgesamt ein möglichst breites Wirkungsspektrum gegen die unzähligen Arten von unerwünschten Mikroorganismen zu erlangen. So beschreiben z.B. Cluff et al., dass es mit derzeit eingesetzten Bioziden nicht möglich ist, alle unerwünschten Mikroorganismen unter Kontrolle zu bringen (S. 6514, Zeilen 38-42 des Dokuments). Das Thema der Umweltverträglichkeit ist vor allem in Europa von besonderer Bedeutung, eigentlich sogar Voraussetzung für die Etablierung von Hydraulic Fracturing in Europa. Die Entwicklung eines von der Öffentlichkeit und den zuständigen Behörden akzeptierten Hydraulic-Fracturing-Verfahrens, das ausschließlich auf dem Einsatz von umweltverträglichen Komponenten beruht - sogenanntes "Biofracking" - könnte die Energieautarkie insbesondere von Europa fördern; die vorliegende Erfindung kann hierfür einen wesentlichen Beitrag leisten. Es wird weiters vermutet, dass die Wirksamkeit von bisher verwendeten Bioziden z.B. auch durch die mitunter auftretenden hohen Salzkonzentrationen verringert wird, wenn beispielsweise ein Prozessfluid beim Einsatz in der Erdkruste Salze aus der Erdkruste löst.

Aus diesen und weiteren Gründen ist eine Aufgabe der vorliegenden Erfindung, ein Prozessfluid mit einem umweltverträglichen Biostabilisator zur großtechnischen Verwendung in der Erdkruste, bevorzugt zur Verwendung in der Erdöl- und Erdgasförderung, insbesondere im Hydraulic Fracturing, oder in einer geothermischen Bohrung (insbesondere für die Tiefengeothermie, d.h. in mehr als 400 m Tiefe), zur Verfügung zu stellen sowie ein diesbezügliches Herstellungsverfahren und ein diesbezügliches Verwendungsverfahren. Insbesondere soll dieser Biostabilisator wirksam gegen ausgewählte unerwünschte mesophile oder thermophile Mikroorganismen sein; vor allem solche, die von derzeit eingesetzten Bioziden nur unzureichend am Wachstum oder Stoffwechsel gehindert werden. Im Besonderen soll dieser Biostabilisator bei einer Umweltbedingung, die in der Erdkruste, insbesondere in geologischen Formationen, herrscht, wirksam sein. Des Weiteren soll dieser Biostabilisator möglichst einfach und kostengünstig hergestellt und eingesetzt werden können, weil der großtechnische Einsatz dies so erfordert.

Folglich betrifft die vorliegende Erfindung ein Verfahren zur Biostabilisierung in der Erdkruste im Hydraulic Fracturing, umfassend das Pumpen eines Prozessfluids in die Erdkruste, vorzugsweise umfassend den direkten Kontakt des Prozessfluids mit der Erdkruste; wobei ein unerwünschter Mikroorganismus, der ein Bakterium bevorzugt ausgewählt aus der Abteilung der Firmicutes, Actinobacteria, Bacteroidetes oder Proteobacteria ist, im Wachstum und/oder im Stoffwechsel gehemmt wird;
wobei das Prozessfluid ein Prozessfluid auf Wasserbasis zur Verwendung in der Erdkruste im Hydraulic Fracturing, umfassend einen Proppant und einen Biostabilisator, ist, wobei der Biostabilisator ein Gemisch aus zumindest einer Harzsäure, oder einem Salz, Alkohol oder Aldehyd davon, und zumindest einer Fettsäure, oder einem Salz, Alkohol oder Aldehyd davon, umfasst, wobei die Fettsäure ausgewählt ist aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure, wobei die Gesamtkonzentration der Harzsäuren im Prozessfluid 0,05 ppm bis 5000 ppm beträgt und die Gesamtkonzentration der Fettsäuren im Prozessfluid 0,05 ppm bis 5000 ppm beträgt.

Überraschenderweise haben sich diese organischen Säuren bei der großtechnischen Verwendung in der Erdkruste, bevorzugt zur Verwendung in der Erdöl- und Erdgasförderung, insbesondere im Hydraulic Fracturing, oder in einer geothermischen Bohrung, als besonders geeignet zur Biostabilisierung herausgestellt.

So sind diese organischen Säuren insbesondere auch bei höheren Temperaturen, wie sie beispielsweise in geologischen Formationen einer Tiefe von 1 km-5 km herrschen können, wirksam und zwar auch gegen ausgewählte unerwünschte mesophile oder thermophile Mikroorganismen, die in dieser Umgebung vorkommen bzw. wachsen können.

Diese organischen Säuren können besonders einfach und kostengünstig zugegeben werden, um das Prozessfluid zu erhalten - beispielsweise können Hopfensäuren in Form eines Hopfenextrakts und ausgewählte Harzsäuren in Form eines natürlichen Harzes, insbesondere Kolophonium, - vorzugsweise eine alkalische Lösung ausgewählter Harzsäuren in Form eines natürlichen Harzes, insbesondere Kolophonium - zugegeben werden.

Die besagten organischen Säuren haben sich bereits in der Lebensmittelherstellung als biostabilisierend bewährt, wie unter anderem in den Dokumenten WO 00/053814 A1, WO 01/88205 A1, WO 2004/081236 A1 und WO 2008/067578 A1 beschrieben. Der Einsatz in der Erdkruste oder gar der großtechnische Einsatz in der Erdkruste wird in jenen Dokumenten jedoch nicht nahegelegt. Im Einsatz in der Lebensmittelherstellung haben sich diese organischen Säuren als verträglich für Mensch und Umwelt herausgestellt.

In Emerstorfer et al. wurde die minimale Hemmkonzentration von Hopfen-β-Säuren, Harzsäuren und einer Mischung aus Harzsäuren und Myristinsäure gegen verschiedene Bakterien, Hefen und Schimmelpilze untersucht und mit der Wirkung von Kalilauge und Wasserstoffperoxid verglichen. Der Einsatz in der Erdkruste oder gar der großtechnische Einsatz in der Erdkruste wird in jenem Dokument jedoch nicht nahegelegt.

Zwar nennen auch Wang et al. Harzsäurederivate als antimikrobielle Stoffe, aber der Einsatz in der Erdkruste oder gar der großtechnische Einsatz in der Erdkruste, vor allem bei den schwierigen Bedingungen die bei der Erdöl- und Erdgasförderung, insbesondere im Hydraulic Fracturing, oder beispielsweise in der Tiefengeothermie herrschen, wird in jenem Dokument ebenfalls nicht nahegelegt.

Die EP 1 496 096 A2 bezieht sich auf Additive für Bohrspühlflüssigkeiten auf Ölbasis. Offenbart wird, dass dieses Additiv zwei Hauptkomponenten enthält (S. 2, Z. 38 des Dokuments). Die erste Hauptkomponente ist ein Polyamid mit endständigem Carboxylsäurerest (S. 2, Z. 38-39 des Dokuments). Die zweite Hauptkomponente ist ein Gemisch, erhältlich aus der Diels-Alder-Reaktion eines Dienophils mit einem Gemisch aus Fettsäuren und Harzsäuren (S. 2, Z. 39-41 des Dokuments). Höchstbevorzugtes Dienophil ist Maleinsäureanhydrid (S. 2, Z. 55 des Dokuments). Aus dem Dokument geht jedoch hervor, dass die Fettsäuren und Harzsäuren nur Ausgangsmaterial für eine chemische Reaktion sind und die Bohrspülflüssigkeit mit Additiv keine Fettsäuren und Harzsäuren enthält. In den Absätzen [0048] und [0049] des Dokuments wird somit auch von "modified fatty acid/resin acid component" gesprochen. Daher wird die vorliegende Erfindung durch die EP 1 496 096 A2 weder vorweggenommen noch nahegelegt.

Die US 2003/0015480 A1 hat ein Verfahren unter Verwendung von Hopfensäuren zur Kontrolle (des Wachstums) von (Mikro)organismen zum Gegenstand. Das Verfahren wird als nützlich für die Behandlung eines jeden "wässrigen Systems" offenbart (Absatz [0064] des Dokuments). Das "wässrige System" wird als "wässriges System", bei dem das Wasser des Systems nicht in Kontakt mit dem Endprodukt kommt, definiert (Absatz [0065] des Dokuments). Im Dokument wird jedoch nicht offenbart, dass die Verwendung von Hopfensäuren in der Erdkruste vorgesehen ist. Das Dokument nimmt die vorliegende Erfindung nicht vorweg noch legt es sie nahe.

Die WO 2014/200671 A2 bezieht sich auf Toninhibitoren (clay inhibitors) für Bohrungen und Fracturing. Offenbart wird eine Toninhibitorzusammensetzung, die dadurch produziert wird, indem maleiniertes "Fettsäurematerial" aus Kolophonium oder Sojaöl mit "Ethylenaminmaterial" umgesetzt wird. Das Fettsäurematerial wird gemäß der Offenbarung des Dokuments sogar in zwei Schritten chemisch umgesetzt (Maleinierung und Umsetzung mit Ethylenaminen, vgl. Beispiel 1 des Dokuments), bevor es zum Einsatz kommt. Daher wird die vorliegende Erfindung durch die WO 2014/200671 A2 weder vorweggenommen noch nahegelegt.

Die WO 91/19771 bezieht sich auf fließfähige Bohrlochbehandlungsmittel auf Basis von Polycarbonsäureestern (und nicht etwa Polycarbonsäuren). Auch durch dieses Dokument wird die vorliegende Erfindung weder vorweggenommen noch nahegelegt.

Der genannte großtechnische Einsatz bedingt den Einsatz von großen Mengen (Volumina) des Prozessfluids. Bevorzugt wird das Prozessfluid folglich in einer Menge von mindestens 10⁴ L, bevorzugt mindestens 10⁵ L, insbesondere mindestens 10⁶ L bereitgestellt. Zum Beispiel wird beim Hydraulic Fracturing üblicherweise zwischen 10⁷ und 10⁸ Liter des Prozessfluids durch das Bohrloch in die Erdkruste injiziert.

Die Erdkruste ist die äußerste, feste Schale der Erde und kann sich bis zu einer Tiefe von etwa 100km erstrecken, im Durchschnitt etwa bis zu einer Tiefe von 35km. Die oberste Schicht der Erdkruste bildet üblicherweise der Erdboden, mit einer üblichen Tiefe von etwa 10m-20m. Darunter liegt eine Vielzahl an geologischen Formationen mit unterschiedlichen Mächtigkeiten. Im Allgemeinen nimmt die Temperatur der Erdkruste mit jedem Kilometer Tiefe um etwa 25°C-30°C zu, mit erheblichen lokalen Abweichungen.

Beispielsweise finden sich die Brennstoffvorkommen, die durch Hydraulic Fracturing gefördert werden sollen, oft in einer Tiefe von 1-3km, so dass die Temperatur dort üblicherweise etwa 25°-90°C betragen kann; somit spielen, je nach lokaler Begebenheit, mesophile, thermophile und/oder hyperthermophile Mikroorganismen beim Hydraulic Fracturing (und in der Erdöl- bzw. Erdgasförderung, der (Tiefen)-Geothermie bzw. großtechnischen Prozessen in der Erdkruste im Allgemeinen) eine Rolle. Cluff et al. nennen für einen Kilometer Tiefe Temperaturen von über 50°C, einen Porendruck von über 30MPa und pH-Werte von weniger als 6 als zu erwartende mögliche Umweltbedingungen (S. 6509, Zeilen 16-18 des Dokuments). Auch halophile oder halotolerante Mikroorganismen spielen, je nach lokaler Begebenheit, beim Hydraulic Fracturing (und in der Erdöl- bzw. Erdgasförderung, der (Tiefen)-Geothermie bzw. großtechnischen Prozessen in der Erdkruste im Allgemeinen) eine Rolle.

Neben den in den jeweiligen Tiefen ansässigen Mikroorganismen muss für spezielle großtechnische Anwendung auch das Wachstum von Mikroorganismen bekämpft werden, die z.B. durch die Bohrung oder das Einpumpen des Prozessfluids selbst in die jeweilige Tiefe eingebracht wurden.

Im Folgenden werden die unerwünschten Mikroorganismen, vor allem bei der Erdöl- und Erdgasförderung, insbesondere bei Hydraulic Fracturing, oder in der (Tiefen)-Geothermie, beschrieben: Die unerwünschten Mikroorganismen sind ausgewählt aus der Gruppe Bakterien, Pilze (Fungi) und Archaeen, bevorzugt sind sie ausgewählt aus der Gruppe der Bakterien. Es sind insbesondere Mikroorganismen (vor allem Bakterien) unerwünscht, welche eines oder mehrere der folgenden produzieren: Säure, extrazelluläre polymere Substanzen (z.B. in Biofilmen) und Sulfide. Insbesondere Sulfidproduzenten sind unerwünscht, unter anderem wegen der entstehenden Geruchsbelästigung, gesundheitlicher Bedenken, der von den entstehenden Sulfiden verursachten Korrosion und der Verunreinigung des zu fördernden fossilen Brennstoffs ("souring").

Ebenso sind für die vorliegende Erfindung diejenigen Mikroorganismen Zielobjekte (d.h. gelten als unerwünschte Mikroorganismen im Sinne der Erfindung), die - insbesondere bei erhöhtem Wachstum bzw. erhöhter Stoffwechselaktivität - die zu gewinnenden Produkte, insbesondere Erdöl oder Erdgas, verstoffwechseln und somit die Ausbeute der Förderung signifikant reduzieren können.

Vorzugsweise sind die unerwünschten Mikroorganismen Bakterien. Sie gehören bevorzugt zur Abteilung der Firmicutes, Bacteroidetes, Actinobacteria oder Proteobacteria, insbesondere zur Abteilung der Firmicutes. Außerdem gehören sie bevorzugt einer der folgenden Gattungen an: *Pseudomonas, Cobetia, Shewanella, Thermoanaerobacter, Arcobacter, Pseudoalteromonas, Marinobacterium, Halolactibacillus (auch bekannt als Halolactobacillus), Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Halolactibacillus* und *Halanaerobium.*

Bei den Archaeen sind insbesondere die Gattungen *Methanosarcinales, Methanohalophilus* und *Methanolobus* unerwünscht.

Außerdem gehören zu den unerwünschten Mikroorganismen bevorzugt auch Mikroorganismen, die in Cluff et al, Mohan et al, 2013 oder Mohan et al, 2014, Struchtemeyer et al 2012b, oder in einer anderen hierin genannten Schrift sinngemäß als unerwünscht erwähnt werden.

Es hat sich im Zuge der Erfindung herausgestellt, dass das Prozessfluid mit dem Biostabilisator wirksam gegen viele dieser unerwünschten Mikroorganismen ist, bevorzugt gegen viele der Firmicutes, insbesondere gegen sulfidproduzierende Firmicutes. Besonders überraschend war, dass das Prozessfluid mit dem Biostabilisator wirksam gegen Bakterien, ausgewählt aus den Gattungen *Halolactibacillus* und *Halanaerobium,* war.

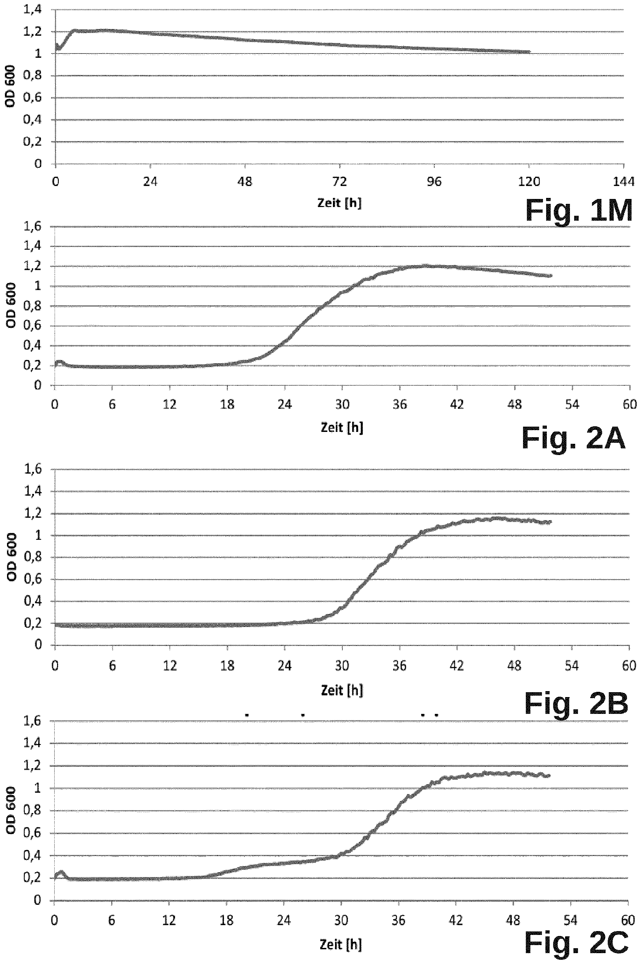

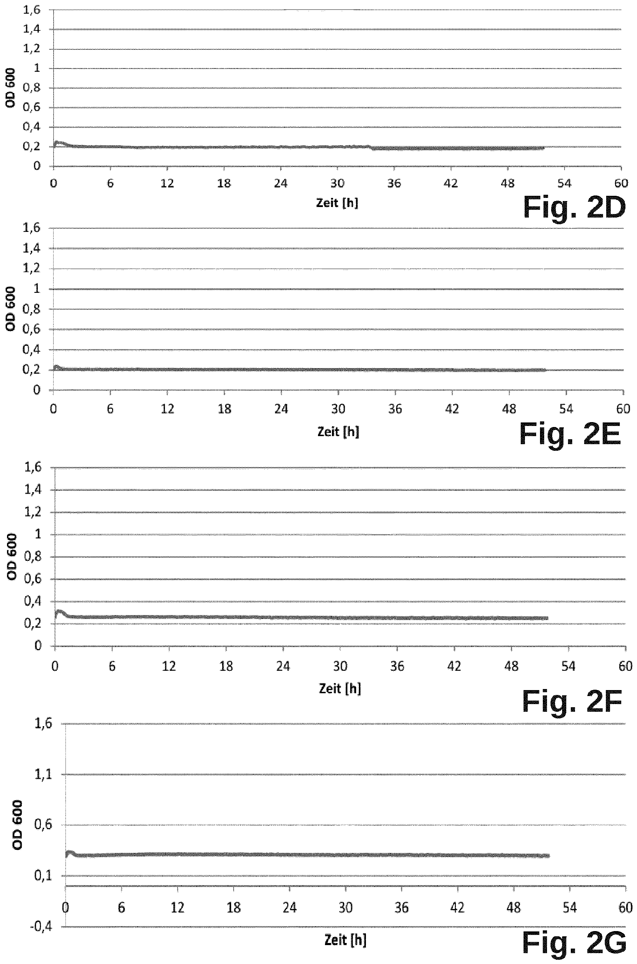

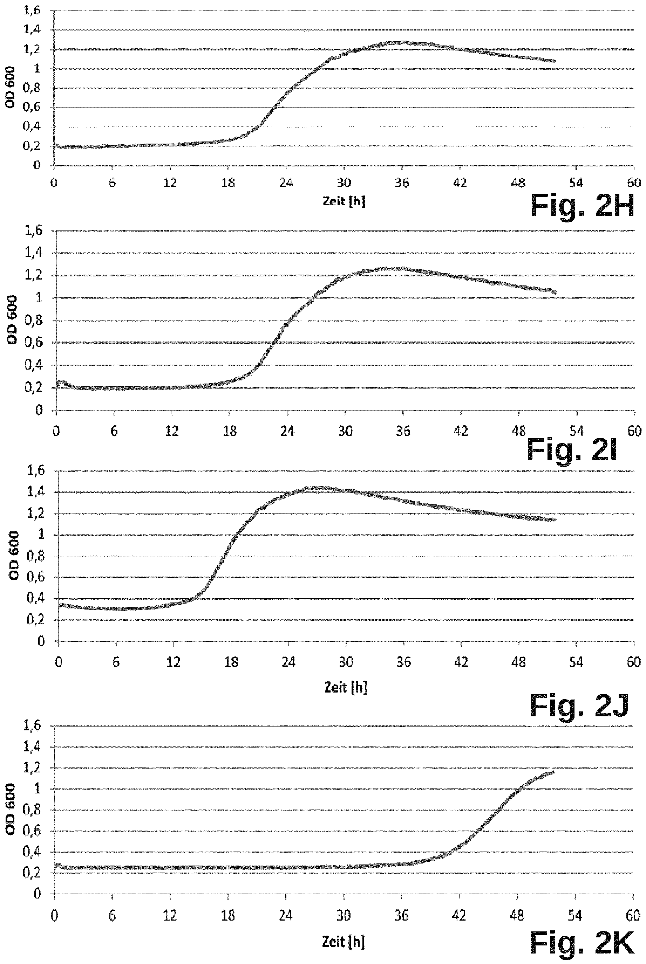

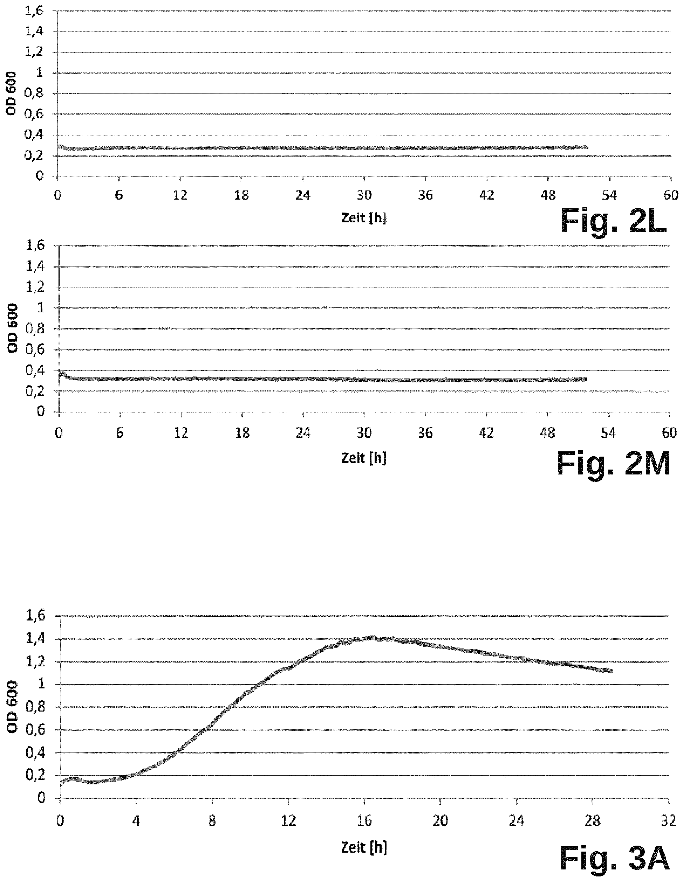

Insbesondere gegen Vertreter von *Halolactibacillus* ist das Prozessfluid wirksam. Beispielsweise berichten Cluff et al., dass die *Halolactibacillus*-Belastung in den ersten zwei Wochen der Flowback-Phase beim Hydraulic Fracturing ansteigt. Und dies, obwohl - wie bei Hydraulic Fracturing in den USA üblich - aggressive Biozide enthalten sind (S. 6514, rechte Spalte, 15.-16. Zeile des 2. Absatzes des Dokuments). Bei 2 von 3 Bohrungen steigt die *Halolactibacillus*-Belastung zeitweise sogar über 90% (vgl. Fig 2. des Dokuments, "Initial Flowback Period" - "Well 1", "Well 2") der analysierten DNA-Sequenzen. Somit ist davon auszugehen, dass herkömmliche, umweltschädliche Biozide - im Gegensatz zum Biostabilisator - unzureichend gegen *Halolactibacillus* wirksam sind.

Zur Gattung *Halolactibacillus* gehören beispielsweise *H. halophilus* und *H. miurensis.* Der Biostabilisator ist insbesondere gegen diese beiden Arten wirksam. Lt. Cluff et al. handelt es sich bei *Halolactibacillus* (und anderen fermentativen Firmicutes) um wichtige vorübergehende Mitglieder der bakteriellen Flora ("transitional community members") die durch ihre Stoffwechselprodukte die Lebensgrundlage für nachfolgende (unerwünschte) Mikroorganismen bereiten (S. 6512, rechte Spalte, letzter Absatz des Dokuments). Auch aus diesem Grund ist eine Wirksamkeit des Prozessfluids gegen *Halolactibacillus* in Aspekten der vorliegenden Erfindung besonders wichtig.

Insbesondere auch gegen *Halanaerobium* wirken bisher eingesetzte Biozide nur unzureichend, wie z.B. von Cluff et al. berichtet. So dominiert *Halanaerobium* die mikrobielle Flora in späteren Phasen von Hydraulic Fracturing (vgl. Figur 2 des Dokuments, Spalten unter dem Titel "Later Produced Water"). Zur Gattung *Halanaerobium* gehört beispielsweise *Halanaerobium congolense,* das z.B. bei einer Massenkonzentration von 10% NaCl und 45°C unter anaeroben Bedingungen gut wächst (d.h. z.B. in einer Schiefergaslagerstätte), und das Thiosulfat bzw. Schwefelverbindungen zu Sulfiden reduzieren kann, indem es Kohlenwasserstoffe (d.h. z.B. den zu fördernden Brennstoff) oxidiert, was in der Erdöl- oder Erdgasförderung nicht erwünscht ist. Auch *Halanaerobium praevalens* ist insbesondere nicht erwünscht.

Die besagten organischen Säuren bzw. Bestandteile, die besagte organische Säuren beinhalten, sind an sich bekannt aus unter anderem den Dokumenten WO 00/053814 A1, WO 01/88205 A1, WO 2004/081236 A1 und WO 2008/067578 A1. Alle in jenen Dokumenten beschriebenen Herstellungsverfahren bzw. Herrichtungsverfahren, insbesondere für Hopfenextrakt, natürliches Harz oder Myristinsäure, oder einem Salz davon, sind bevorzugt im Sinne der vorliegenden Erfindung.

Hopfensäuren sind Inhaltsstoffe der unbefruchteten Blütenstände weiblicher Hopfenpflanzen. Diese bitter schmeckenden Hopfenbestandteile werden seit Jahrhunderten zur Herstellung von lagerfähigem Bier genutzt und haben somit sogar in die menschliche Ernährung Eingang gefunden. Die Umweltverträglichkeit, insbesondere bei den hierin vorgeschlagenen Endkonzentrationen, ist somit gegeben.

Die Hopfenpflanze *Humulus lupulus* gehört zur botanischen Familie der *Cannabiaceae;* Hopfen wird in vielen Ländern kultiviert und bei der Herstellung von Bier verwendet. Unbefruchtete weibliche Hopfenpflanzen bilden die so genannten Hopfendolden, in denen das Hopfenharz vorliegt. Das Hopfenharz wiederum enthält verschiedenste biostabilisierende Substanzen. Die Hopfenbestandteile können mit Hilfe von Ethanol oder überkritischem CO₂ extrahiert werden.

Die aus dem Hopfenharz gewinnbaren Hopfenbitterstoffe beinhalten verschiedene Fraktionen, wie Humulone (alpha-Säuren) und Lupulone (beta-Säuren). Diese Substanzen weisen mikrobiologische Hemmwirkung auf und können durch Erhitzen in ihre Isoformen überführt werden, wodurch bessere Wasserlöslichkeit bei nach wie vor vorhandener Hemmwirkung auf unerwünschte Mikroorganismen gegeben ist. Zur Erhöhung der Löslichkeit und Verhinderung der Niederschlagsbildung bei der Lagerung ist es mitunter günstig, Myristinsäure zu geringen Anteilen als technischen Hilfsstoff bereits bei der Herstellung beizugeben.

Beispiele von geeigneten Hopfensäuren finden sich in der US 2003/015480 und in der WO 00/053814 A1.

Auch bei vielen Fettsäureverbindungen handelt es sich um physiologisch unbedenkliche Naturprodukte. Die Umweltverträglichkeit insbesondere bei den hierin vorgeschlagenen Endkonzentrationen ist somit gegeben. Die Fettsäure-Verbindungen gemäß der vorliegenden Erfindung können auch Fettsäurealkohole oder Fettsäurealdehyde sein. Die Fettsäure-Verbindungen können dabei auch modifiziert, etwa durch den Einbau von funktionellen Gruppen, wie-OH,-SH,-NH₂,-F,-Cl,-Br,-I u. dgl. sein (ausgenommen solche Derivate, die für Menschen, Tiere, oder Pflanzen toxisch sind); auch aliphatische Seitenketten und/oder ein oder mehrere (insbesondere zwei oder drei) (ungesättigte) Doppelbindungen sind möglich, solange die physiko-chemischen Eigenschaften der (aliphatischen) Grundkette, insbesondere die Löslichkeit in biostabilisierenden Konzentrationen, sowie die Struktur am Cl-Atom erhalten bleiben. Die biostabilisierende Wirkung von Fettsäuren ist beispielsweise aus der WO 2004/081236 A1 bekannt. Generell haben Versuche gezeigt, dass in der Regel die freien Fettsäuren und deren Seifen im Sinne der vorliegenden Erfindung eine bessere antimikrobielle Wirksamkeit aufweisen als deren Aldehyde oder Ester. Besonders die Myristinsäure bzw. -seife hat sich erfindungsgemäß besonders bewährt, vor allem was ihre antimikrobielle Aktivität anbelangt.

Baumharze von Pinien/Kiefern beispielsweise sowie das daraus durch Destillation gewonnene Kolophonium, welches zum größten Teil aus Harzsäuren besteht, weisen bakterizide Eigenschaften auf, welche für die menschliche Ernährung bereits seit Jahrhunderten genutzt werden. Die Umweltverträglichkeit insbesondere bei den hierin vorgeschlagenen Endkonzentrationen ist somit gegeben.

Vorzugsweise werden die Harzsäuren bzw. das Harz aus Kiefern gewonnen. Kiefern, wie die österreichische Schwarzföhre *Pinus nigra Austriaca,* gehören zur botanischen Familie der Kieferngewächse oder *Pinaceae;* sie sind vornehmlich auf der Nordhalbkugel weit verbreitet und ihre Harze haben bei der Herstellung von Retsina, dem griechischen geharzten Wein, eine lange Tradition. Zur Gewinnung der biostabilisierend wirksamen Bestandteile wird das Kiefernharz vorzugsweise mittels Destillation in die beiden Fraktionen Terpentinöl und Kolophonium aufgetrennt. Im Kolophonium liegen nun die wirksamen Bestandteile, ein Gemisch aus Harzsäuren, vor. Diese können mit Alkalien zu Alkali-Resinaten gelöst werden.

Kolophonium ist ein Gemisch aus aromatischen Verbindungen wie Abietinsäure, Dehydroabietinsäure und deren Isomere. Diese so genannten Harzsäuren, welche in Form von festen Kolophoniumblöcken kommerziell erwerbbar sind, entfalten zu unterschiedlichen Graden biostabilisierende Aktivität und können als wasserlösliche Alkali-Resinate eingesetzt werden. Zur Erhöhung der Löslichkeit und Verhinderung der Niederschlagsbildung der Harzseife bei der Lagerung ist es günstig Myristinsäure zu geringen Anteilen als technischen Hilfsstoff bereits bei der Herstellung beizugeben.

Erfindungsgemäß können sämtliche lebensmittelkompatiblen Harze, wie sie beispielsweise in "Ullmann's Encyclopedia of Industrial Chemistry", Vol. A 23 (1993), Seiten 73-88, beschrieben sind, eingesetzt werden, wie beispielsweise Baumharze, insbesondere Balsame, wie z.B. Benzoe, Kiefernbalsam, Myrrhe und Tolubalsam. Aus Gründen der Wirtschaftlichkeit werden erfindungsgemäß vor allem Kolophonium-Produkte und Derivate bevorzugt. Derartige Produkte sind beispielsweise in Ullmann's Encyclopedia of Industrial Chemistry, Vol. A 23 (1993), auf den Seiten 79-88 beschrieben.

Unter anderem wegen der weiter oben beschriebenen, überraschenden biostabilisierenden Wirkung im Hinblick auf ausgewählte mesophile, thermophile, hyperthermophile, halotolerante und/oder halophile Bakterien, insbesondere der Abteilung Firmicutes, ist das Prozessfluid zur Verwendung im Hydraulic Fracturing, dadurch gekennzeichnet, dass das Prozessfluid ferner ein Stützmittel ("proppant" oder "propping agent") und vorzugsweise zumindest einen Stoff umfasst, der ausgewählt ist aus der Gruppe bestehend aus Gelbildnern ("gelling agents"), Tonstabilisatoren ("clay stabilizers" oder "clay stabilizing agents"), Reibungsminderern ("friction reducers" oder "friction reducing agents"), Kettenbrechern ("breaking agents"), Vernetzern ("crosslinkers" oder "crosslinking agents") und Puffermitteln ("buffering agents"). Solch ein Prozessfluid kann auch als Förderfeldfluid ("oilfield fluid") oder "drilling fluid" bezeichnet werden.

Hydraulic Fracturing ist dem Fachmann vertraut. Unter anderem beschreiben (neben den eingangs zitierten) die folgenden Dokumente Aspekte von Hydraulic Fracturing: US 7,913,762, EP 2175004 A1, US 2013/0196884 A1, WO 2014/028105 A1, US 6,488,091, US 7,147,067, US 7,825,073, US 5,330,005, US 5,833,000, US 4,169,798, US 8,739,878, US 3,960,736, US 6,810,959, WO 2012/045711 A1, WO 2012/123338 A1.

Dem Fachmann ist auch bekannt (unter anderem aus den direkt im oberen Absatz genannten Schriften) welche Bestandteile im Prozessfluid zur Verwendung im Hydraulic Fracturing in welchen Mengen enthalten sein sollen. Dies ist unter anderem abhängig von der Beschaffenheit der jeweiligen Erdöl- oder Erdgaslagerstätte. Bevorzugt sind als Stützmittel einer oder mehrere der folgenden Bestandteile enthalten, ausgewählt aus: Quarzsand, verarbeiteter Bauxit und jegliche Art von Keramikkügelchen. Wenn ein Gelbildner (oder auch Verdicker) enthalten ist, sind vorzugsweise als Gelbildner einer oder mehrere der folgenden Bestandteile enthalten, ausgewählt aus: Biopolymeren oder polymeren Derivaten davon, vorzugsweise Polysacchariden, bevorzugt Stärken und modifizierte Stärken, Pflanzengummis oder Pektinen, insbesondere Stärken und modifizierte Stärken. Wenn ein Tonstabilisator enthalten ist, ist vorzugsweise als Tonstabilisator einer oder mehrere der folgenden Bestandteile enthalten, ausgewählt aus: Kaliumsalzen wie z.B. Kaliumchlorid, Natriumchlorid und Ammoniumsalzen wie z.B. Ammoniumchlorid und Tetramethylammoniumchlorid. Wenn ein Reibungsminderer enthalten ist, ist vorzugsweise als Reibungsminderer einer oder mehrere der folgenden Bestandteile enthalten, ausgewählt aus: Latexpolymeren, Polyacrylamid und hydrogenisierten leichten Erdöldestillaten. Wenn ein Vernetzer enthalten ist, ist vorzugsweise als Vernetzer einer oder mehrere der Bestandteile enthalten, ausgewählt aus: Triethanolamin, Natriumtetraborat, Zitrusterpenen, Zirkondichloridoxid, Boraten und organischen Zirkoniumkomplexen. Wenn ein Puffermittel enthalten ist, ist vorzugsweise als Puffermittel einer oder mehrere der Bestandteile enthalten, ausgewählt aus: Essigsäure, Fumarsäure, Kaliumcarbonat, Borax, Natriumacetat, Natron, Natriumcarbonat, und Natriumhydroxid. Es ist Wasser enthalten. Das Prozessfluid ist auf Wasserbasis vorgesehen, d.h. Wasser ist in Bezug auf die Gesamtmasse der Hauptbestandteil des Prozessfluids und dient beispielsweise als Lösungsmittel oder Träger.

Zusätzlich zu den eben genannten können weitere Bestandteile im Prozessfluid zur Verwendung im Hydraulic Fracturing enthalten sein, unter anderem ausgewählt aus Bestandteilen genannt in einer von den Schriften US 7,913,762, EP 2175004 A1, US 2013/0196884 A1, WO 2014/028105 A1, US 6,488,091, US 7,147,067, US 7,825,073, US 5,330,005, US 5,833,000, US 4,169,798, US 8,739,878, US 3,960,736, US 6,810,959, WO 2012/045711 A1, WO 2012/123338 A1, oder jegliche andere Bestandteile, die der Fachmann zur Verwendung in der Erdöl- oder Erdgasförderung, insbesondere im Hydraulic Fracturing, als zweckmäßig erachten könnte. Zusätzlich oder anstatt dessen können noch jegliche weiteren Bestandteile im Prozessfluid zur Verwendung in der Erdöl- oder Erdgasförderung vorgesehen werden, insbesondere im Hydraulic Fracturing, sofern ein Stützmittel enthalten ist.

Kurz zusammengefasst und vereinfacht dargestellt besteht Hydraulic Fracturing nach der Bohrung üblicherweise aus diesen drei Abschnitten:
1. Injektion des Prozessfluids ("fracturing fluid" oder "fracfluid") unter hohem Druck in das Bohrloch, wodurch Risse im brennstoffhaltigen Sediment in der Tiefe verursacht werden;
2. Rückfluss des Prozessfluids ("flowback"), bei dem ca. 10% - 70% des Prozessfluids wieder zu Tage treten, mit einer üblichen Dauer von zwei Wochen und, nachdem der Rückfluss abgeklungen ist:
3. Produktionsphase, bei der der restliche Anteil des Prozessfluids, unter anderem vermischt mit Formationswasser und den zu fördernden Brennstoffen, als sogenannten Produktionswasser zu Tage gefördert wird ("produced water"). Bevorzugt ist das Prozessfluid mit dem Biostabilisator während dieser Phase (bzw. gegen Mikroorganismen, die während dieser Phase gehäuft auftreten) wirksam, um unerwünschten Veränderungen an den zu fördernden Brennstoffen oder an der verwendeten Infrastruktur im Bohrloch entgegenzuwirken. Üblicherweise dauert diese Phase am längsten von den drei genannten, so dass die Gefahr für mikrobiell verursachte Schäden am höchsten ist. Laut Cluff et al. kann *Halanaerobium* im Produktionswasser dominieren, vor allem mit fortschreitender Dauer der Produktionsphase (vgl. Figur 2 des Dokuments). Deshalb ist eine Biostabilisierung hinsichtlich *Halanaerobium* besonders angezeigt.

Im Zuge der vorliegenden Erfindung hat sich herausgestellt, dass das Prozessfluid zur Verwendung in der Erdöl- oder Erdgasförderung oder in einer geothermischen Bohrung auch dann besonders gut biostabilisierend in Hinblick auf hierin genannte unerwünschte Mikroorganismen wirkt, wenn Biopolymere wie beispielsweise Polysaccharide, insbesondere Stärke und modifizierte Stärken, als Gelbildner enthalten sind. Diese Biopolymere sind durch mikrobielle Zersetzung z.B. im Bohrloch sehr gefährdet. Andererseits kann eine (gewollte) Zersetzung der dem Prozessfluid zugesetzten Bestandteile wie beispielsweise den Biopolymeren und/oder den Biostabilisatoren nach einer gewissen Zeit erwünscht sein. Beides lässt sich mit der vorliegenden Erfindung realisieren, weil die Abbaubarkeit dieser Stoffe - wegen ihrer prinzipiellen Unbedenklichkeit und ihrer grundsätzlichen biologischen Abbaubarkeit - in einem gewissen Umfang steuerbar ist.

Daher ist das Prozessfluid zur Verwendung in der Erdöl- oder Erdgasförderung oder in einer geothermischen Bohrung in einer bevorzugten Ausführungsform dadurch gekennzeichnet, dass es ferner zumindest einen Gelbildner enthält, wobei der Gelbildner ein Biopolymer oder ein polymeres Derivat davon ist; vorzugsweise wobei das Biopolymer ein Polysaccharid, bevorzugt eine Stärke, ein Pflanzengummi wie Xanthan, eine Cellulose, z.B. polyanionische Cellulose, oder ein Pektin, insbesondere eine Stärke, ist. Im Sinne der Erfindung ist in dieser Ausführungsform unter anderem jede dem Fachmann als zweckmäßig erscheinende Derivatisierung des Biopolymers möglich; allerdings muss die gelbildende Eigenschaft des Biopolymers im Wesentlichen erhalten bleiben oder - im Hinblick auf die Abbaubarkeit - steuerbar bzw. kontrollierbar sein. Bevorzugte Biopolymere bzw. Derivatisierungen werden auch in der WO 2012/045711 A1, US 4,659,811, WO 2006/109225, US 5,681,796, US 4,964,604, US 4,169,798 oder der US 6,810,959 offenbart, oder in ausgewählten der weiter oben zitierten Schriften.

Im Prozessfluid zur Verwendung in einer geothermischen Bohrung können weitere Bestandteile enthalten sein, unter anderem Bestandteile, die für eine Bohrspülung in der Geothermie bzw. der Tiefengeothermie typisch sind, oder jegliche andere Bestandteile, die der Fachmann zur Verwendung in einer geothermischen Bohrung als zweckmäßig erachten könnte. Vorzugsweise sind ein oder mehrere Stoffe enthalten ausgewählt aus den folgenden Gruppen: Gelbildner, insbesondere solche wie im vorigen Absatz genannt; Puffermittel, insbesondere ausgewählt aus Essigsäure, Fumarsäure, Kaliumcarbonat, Borax, Natriumacetat, Natron, Natriumcarbonat, Natriumhydroxid; und Tonmineralien, insbesondere Bentonit, in feinkörniger Form (z.B. gemahlen). Beispiel 5A zeigt ein Prozessfluid, dass erfolgreich als Bohrspülung in einer geothermischen Bohrung eingesetzt wurde.

Überraschenderweise hat sich herausgestellt, dass es vorteilhaft ist, wenn im Prozessfluid, insbesondere zur Verwendung in einer geothermischen Bohrung, ein Entschäumer enthalten ist (vgl. Beispiel 5B). Bevorzugt ist dieser Entschäumer auf Basis von nicht-ionischen Tensiden, beispielsweise auf Fettalkoholalkoxylat-Basis oder Alkylenoxidpolymer-Basis. Ein geeignetes Produkt ist beispielsweise BASOPUR® DF 5 von BASF SE). Das Prozessfluid umfasst Wasser.

Überraschend hat sich im Zuge der vorliegenden Erfindung herausgestellt, dass das Prozessfluid, in dem Wasser enthalten ist oder hinzugefügt wird, umso besser biostabilisierend in Hinblick auf hierin genannte unerwünschte Mikroorganismen wirkt, je weicher das Wasser ist oder gemacht wird. Besonders gut biostabilisierend wirkt das Prozessfluid, wenn die Wasserhärte höchstens 20 °dH (deutsche Härtegrade) bzw. 3,57 mmol/l (Erdalkaliionen) beträgt, bevorzugt höchstens 15 °dH bzw. 2,67 mmol/l, mehr bevorzugt höchstens 10 °dH bzw. 1,78 mmol/l, noch mehr bevorzugt höchstens 7,5 °dH bzw. 1,34 mmol/l, insbesondere höchstens 5 °dH bzw. 0,89 mmol/l. Durch die Verwendung des Prozessfluids in der Erdkruste, insbesondere im Hydraulic Fracturing, können Erdalkaliionen in Lösung gebracht werden, was eine höhere Wasserhärte mit sich bringt.

Deshalb ist das Prozessfluid in einer bevorzugten Ausführungsform dadurch gekennzeichnet, dass es ferner einen Wasserenthärter umfasst. Alle dem Fachmann als zweckmäßig erscheinenden Wasserenthärter sind geeignet. Bevorzugt ist der Wasserenthärter ein Kationentauscher oder ein Chelator, insbesondere ausgewählt aus: Zeolithen (z.B. Zeolith A), anorganischen Polyphosphaten (z.B. Triphosphat), Ethylendiamintetraessigsäure und deren Salzen, Nitrilotriessigsäure und deren Salzen, Polyacrylaten, und Zitrat.

Es hat sich herausgestellt, dass das Prozessfluid besonders gut biostabilisierend in Hinblick auf hierin genannte unerwünschte Mikroorganismen wirkt, wenn mehrere der genannten organischen Säuren darin enthalten sind. Dadurch ergibt sich ein synergistischer Effekt in Hinblick auf die biostabilisierende Wirkung. Daher betrifft eine weitere bevorzugte Ausführungsform das Prozessfluid, ferner dadurch gekennzeichnet, dass der Biostabilisator ein Gemisch umfasst, vorzugsweise ist, aus:
zumindest einer Hopfensäure, oder einem Salz, Alkohol oder Aldehyd davon, und zumindest einer Harzsäure, oder einem Salz, Alkohol oder Aldehyd davon, und zumindest der Fettsäure, oder einem Salz, Alkohol oder Aldehyd davon.

Im Zuge der vorliegenden Erfindung hat sich ein Biostabilisator, der zumindest eines ausgewählt aus Hopfenextrakt, ein natürliches Harz (insbesondere Kolophonium) und Myristinsäure bzw. ein Salz davon enthält, überraschend als besonders wirkungsvoll in Hinblick auf hierin genannte unerwünschte Mikroorganismen herausgestellt. Folglich ist das Prozessfluid in einer besonders bevorzugten Ausführungsform dadurch gekennzeichnet, dass der Biostabilisator ein Gemisch ist aus mindestens einem, bevorzugt mindestens zwei, insbesondere allen, der folgenden Bestandteile: Hopfenextrakt, natürliches Harz, bevorzugt Kolophonium, wobei das natürliche Harz vorzugsweise in gelöster Form zugegeben ist, und Myristinsäure oder einem Salz davon. Eine weitere besonders bevorzugte Ausführungsform betrifft das Prozessfluid, das ferner dadurch gegenzeichnet ist, dass der Biostabilisator erhältlich ist durch Zugabe von mindestens einem, bevorzugt mindestens zwei, insbesondere allen, der folgenden Bestandteile: Hopfenextrakt, natürliches Harz, bevorzugt Kolophonium, wobei das natürliche Harz vorzugsweise in gelöster Form zugegeben wird, und Myristinsäure oder einem Salz davon.

Vorzugsweise ist Hopfensäure für die vorliegende Erfindung eine alpha-Hopfensäure, ausgewählt aus der Gruppe bestehend aus Humulon, Isohumulon, Cohumulon, Adhumulon, Prähumulon, Posthumulon, Tetrahydroisohumulon und Tetrahydrodeoxyhumulon, oder eine beta-Hopfensäure, ausgewählt aus der Gruppe bestehend aus Lupulon, Colupulon, Adlupulon, Prälupulon, Postlupulon, Hexahydrocolupulon und Hexahydrolupulon, weil sie zur Biostabilisierung geeignet sind.

Vorzugsweise ist die Harzsäure für die vorliegende Erfindung ausgewählt aus der Gruppe bestehend aus Pimarsäure, Neoabietinsäure, Abietinsäure, Dehydroabietinsäure, Levopimarsäure und Palustrinsäure, weil sie zur Biostabilisierung geeignet sind.

Die Fettsäure ist für die vorliegende Erfindung ausgewählt aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure, weil sie zur Biostabilisierung geeignet sind. Besonders bevorzugt ist Myristinsäure.

Untersuchungen im Laufe der vorliegenden Erfindungen haben Konzentrationsbereiche der Biostabilisator-Komponenten ergeben, die besonders geeignet zur Biostabilisierung hinsichtlich unerwünschter Mikroorganismen sind. Somit betrifft eine weitere bevorzugte Ausführungsform der vorliegenden Erfindung das Prozessfluid, dadurch gekennzeichnet, dass:
- die Gesamtkonzentration der Hopfensäuren im Prozessfluid 0,01-1000 ppm beträgt, bevorzugt 0,05-100 ppm, mehr bevorzugt 0,1-10 ppm, insbesondere 0,5-5 ppm; und/oder
- die Gesamtkonzentration der Harzsäuren im Prozessfluid 0,05-5000 ppm beträgt, bevorzugt 0,25-500 ppm, mehr bevorzugt 0,5-50 ppm, insbesondere 0,25-25 ppm; und/oder
- die Gesamtkonzentration der Fettsäuren im Prozessfluid 0,05-5000 ppm beträgt, bevorzugt 0,25-500 ppm, mehr bevorzugt 0,5-50 ppm, insbesondere 0,25-25 ppm.

Vorzugsweise bezieht sich "ppm" ("parts per million") dabei auf den Anteil der jeweiligen organischen Säure(n) (in mg) an der Gesamtmasse des Prozessfluids (in kg), d.h. ppm steht für mg/kg.

Bei den genannten Konzentrationen handelt es sich um Biostabilisator-Endkonzentrationen, das heißt, das Prozessfluid kann mit den genannten Biostabilisator-Endkonzentrationen in die Erdkruste eingepumpt werden und dort, neben der technischen Wirkung für die jeweilige spezifische Anwendung, seine biostabilisierende Wirkung entfalten. Insbesondere mit diesen Endkonzentrationen ist das Prozessfluid umweltverträglich.

In ausgewählten Situationen ist es erforderlich, das biostabilisierende Wirkungsspektrum des Prozessfluids zu verbreitern bzw. zusätzliche biozide Effekte damit zu erzielen. Darum ist das Prozessfluid in einer weiteren bevorzugten Ausführungsform dadurch gekennzeichnet, dass es ferner mindestens einen weiteren antimikrobiellen Wirkstoff und/oder Biostabilisator beinhaltet, vorzugsweise ausgewählt aus Essigsäure, Milchsäure, Propionsäure, Benzoesäure, Sorbinsäure, Ameisensäure, und Salzen davon; auch Chitosan und Chitosan-Derivate, wie beispielsweise in der WO 2012/149560 A2 offenbart, sind bevorzugt.

In einem weiteren Aspekt wird die Verwendung des Prozessfluids in der Erdkruste, bevorzugt in der Öl- oder Gasförderung, insbesondere im Hydraulic Fracturing, oder in einer geothermischen Bohrung, offenbart. Das Prozessfluid kann beispielsweise in Leitungen, Rohren oder (ausgekleideten oder nicht ausgekleideten) Bohrlöchern usw. verwendet werden. Bevorzugt ist die Verwendung des Prozessfluids in der Erdkruste auch bei Bohrungen jeder Art. In einer bevorzugten Ausführungsform werden mindestens 10⁴ L, bevorzugt mindestens 10⁵ L, insbesondere mindestens 10⁶ L des Prozessfluids verwendet. Vorzugsweise wird dabei durch den Biostabilisator des Prozessfluids ein unerwünschter Mikroorganismus im Wachstum und/oder im Stoffwechsel gehemmt, der ein Bakterium ist, bevorzugt ausgewählt aus der Abteilung der Firmicutes, Actinobacteria, Bacteroidetes oder Proteobacteria, insbesondere der Abteilung der Firmicutes. Dieser unerwünschte Mikroorganismus gehört ferner bevorzugt einer Gattung von Bakterien an, die ausgewählt ist aus *Pseudomonas, Cobetia, Shewanella, Thermoanaerobacter, Arcobacter, Pseudoalteromonas, Marinobacterium, Halolactibacillus, Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Halolactibacillus* und *Halanaerobium.*

In einer weiteren bevorzugten Ausführungsform der Verwendung des Prozessfluids, insbesondere in einer geothermischen Bohrung, wird das Prozessfluid in einer Tiefe von 100 m - 8000 m, bevorzugt von 200 m - 7000 m, mehr bevorzugt von 300 m - 6000 m, noch mehr bevorzugt von 400 m - 5000 m, insbesondere von 500 m - 4000 m oder gar 600 m - 3500 m eingesetzt.

Das Prozessfluid wird bei der Verwendung in einer geothermischen Bohrung bevorzugt als Bohrspülung eingesetzt.Da der Biostabilisator des Prozessfluids insbesondere in den hierin genannten Endkonzentrationen umweltverträglich ist, ist das Prozessfluid auch ausgesprochen geeignet für eine Verwendung, die den direkten Kontakt des Prozessfluids mit der Erdkruste umfasst, denn bei einer solchen Verwendung kann ein höheres Risiko einer Grundwasserkontamination bestehen. Beispielsweise kommt das Prozessfluid beim Hydraulic Fracturing in direkten Kontakt mit der Erdkruste, insbesondere in einer Schiefergaslagerstätte, und könnte, aufgrund des Einpumpens mit hohem Druck, durch Risse und Instabilitäten in den Formationen in darüber liegendes Grundwasser austreten. Daher umfasst die Verwendung vorzugsweise den direkten Kontakt des Prozessfluids mit der Erdkruste.

Unter anderem aus den eben genannten Gründen ist das Prozessfluid besonders für besagten direkten Kontakt mit der Erdkruste geeignet. In einer bevorzugten Ausführungsform werden mindestens 10⁴ L, bevorzugt mindestens 10⁵ L, insbesondere mindestens 10⁶ L des Prozessfluids in die Erdkruste gepumpt.

Im erfindungsgemäßen Verfahren zur Biostabilisierung wird durch den Biostabilisator des Prozessfluids ein unerwünschter Mikroorganismus im Wachstum und/oder im Stoffwechsel gehemmt, der ein Bakterium ist, bevorzugt ausgewählt aus der Abteilung der Firmicutes, Actinobacteria, Bacteroidetes oder Proteobacteria, insbesondere der Abteilung der Firmicutes. Dieser unerwünschte Mikroorganismus gehört ferner bevorzugt einer Gattung von Bakterien an, die ausgewählt ist aus *Pseudomonas, Cobetia, Shewanella, Thermoanaerobacter, Arcobacter, Pseudoalteromonas, Marinobacterium, Halolactibacillus, Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Halolactibacillus* und *Halanaerobium.* In einer weiteren bevorzugten Ausführungsform des Verfahrens zur Biostabilisierung in der Erdkruste, insbesondere in einer geothermischen Bohrung, wird das Prozessfluid in einer Tiefe von 100 m - 8000 m, bevorzugt von 200 m - 7000 m, mehr bevorzugt von 300 m - 6000 m, noch mehr bevorzugt von 400 m - 5000 m, insbesondere von 500 m - 4000 m oder gar 600 m - 3500 m eingesetzt. In einer geothermischen Bohrung wird das Prozessfluid in diesem Verfahren bevorzugt als Bohrspülung eingesetzt.

In einem weiteren Aspekt der vorliegenden Offenbarung wird ein Verfahren zur Herstellung des Prozessfluids offenbart, wobei das Prozessfluid Wasser beinhaltet. Das Verfahren umfasst die Zugabe mindestens einer organischen Säure oder eines Salzes, Alkohols oder Aldehyds davon, zum Wasser oder einem Wasser beinhaltenden Teil des Prozessfluids, wobei die mindestens eine organische Säure ausgewählt ist der Gruppe bestehend aus Hopfensäuren, Harzsäuren, Fettsäuren und Gemischen zweier oder aller davon. In einer bevorzugten Ausführungsform werden mindestens 10⁴ L, bevorzugt mindestens 10⁵ L, insbesondere mindestens 10⁶ L des Prozessfluids hergestellt.

Sofern das Prozessfluid eine Harzsäure beinhaltet, ist es äußerst wirtschaftlich, dass diese in Form eines Harzes oder eines Destillats davon zugegeben wird, insbesondere Kolophonium. Folglich ist, wenn mindestens eine Harzsäure zugegeben wird, das Herstellungsverfahren in einer bevorzugten Ausführungsform dadurch gekennzeichnet, dass die mindestens eine Harzsäure in Form eines Harzes, vorzugsweise eines natürlichen Harzes, noch mehr bevorzugt in Form von Kolophonium, zugegeben wird. In einer weiteren Ausführungsform ist es günstig, wenn dabei ein gelöstes, emulgiertes bzw. dispergiertes oder pastöses Kiefernharzprodukt eingesetzt wird, vorzugsweise auf Basis von Kiefernharz, Kiefernbalsam, Kiefernharzsäuren, Salzen der Kiefernharzsäuren (Harzseifen), nicht-denaturierten Derivaten von Kiefernharzen (d.h. Derivate, die ohne Einfluss von starken Säuren oder Basen erhalten werden), eingesetzt. Als Kolophoniumderivate werden erfindungsgemäß bevorzugt auch chemisch-synthetisierte oder aus Kolophoniumprodukten isolierte Einzelkomponenten des Kolophoniums verstanden, wie beispielsweise Levopimarsäure, Neoabietinsäure, Palustrinsäure, Abietinsäure, Dehydroabietinsäure, Tetrahydroabietinsäure, Dihydroabietinsäure, Pimarsäure und Isopimarsäure. Die Derivatisierung von Kolophonium kann im Sinne der Erfindung weiters die Hydrierung, Polymerisierung, Additionsreaktionen, Veresterung, Nitrilierung, Aminierung, etc. vorsehen. In den in diesem Absatz genannten Ausführungsformen ist besonders bevorzugt, wenn der jeweilige harzsäurehältige Bestandteil (z.B. das Harz oder ein Destillat davon) als alkoholische Lösung oder Suspension, vorzugsweise als eine 1 bis 95%ige, insbesondere als eine 10 bis 80%ige Ethanollösung, oder als alkalische Lösung, vorzugsweise als 0,5% bis 35%ige alkalische Lösung zugegeben wird (auch die mindestens eine Fettsäure kann in alkalischer Lösung wie eben beschrieben zugegeben werden).

Ebenfalls kann es zweckmäßig sein, im Herstellungsverfahren, wenn mindestens eine Harzsäure und/oder Fettsäure zugegeben wird, dass die mindestens eine Harzsäure und/oder Fettsäure als salzhaltige Lösung oder Suspension zugegeben wird, vorzugsweise als Kaliumsalzlösung, insbesondere als 0,5 bis 35%ige Kaliumsalzlösung.

Aus wirtschaftlichen Gründen ist, wenn mindestens eine Hopfensäure im Herstellungsverfahren zugegeben wird, die Zugabe der mindestens einen Hopfensäure in Form eines Hopfenextrakts zu bevorzugen. Die Herstellung von Hopfenextrakt selbst ist seit langem bekannt, üblicherweise findet die Extraktion aus unbefruchteten Blütenstände weiblicher Hopfenpflanzen mit Alkohol, v.a. Ethanol, als Lösungsmittel statt oder, bevorzugterweise durch Extraktion mit überkritischem CO₂. Weitere bevorzugte Varianten der Zugabe von Hopfenextrakt sind in der WO 00/053814 A1 offenbart.

In einer weiteren bevorzugten Ausführungsform der vorliegenden Offenbarung umfasst das Herstellungsverfahren ferner die Zugabe eines weiteren antimikrobiellen Wirkstoffs oder Stabilisators zum Wasser oder einem Wasser beinhaltenden Teil des Prozessfluids, vorzugsweise ausgewählt aus Essigsäure, Milchsäure, Propionsäure, Benzoesäure, Sorbinsäure, Ameisensäure und deren Salzen. Auch die Zugabe von Chitosan und Chitosan-Derivaten, wie beispielsweise in der WO 2012/149560 A2 offenbart, ist bevorzugt.

In einer besonders bevorzugten Ausführungsform der vorliegenden Offenbarung ist das Herstellungsverfahren zur Herstellung eines Prozessfluids zur Verwendung in der Öl- oder Gasförderung, insbesondere im Hydraulic Fracturing. Dieses Verfahren ist dadurch gekennzeichnet, dass es ferner die Zugabe eines Stützmittels und vorzugsweise zumindest eines Stoffes umfasst, zum Wasser oder einem Wasser beinhaltenden Teil des Prozessfluids, wobei der Stoff ausgewählt ist aus der Gruppe bestehend aus Tonstabilisatoren, Reibungsminderern, Kettenbrechern, Gelbildern, Vernetzern und Puffermitteln.

Weitere bevorzugte Merkmale des Herstellungsverfahrens sind in den Dokumenten WO 00/053814 A1, WO 01/88205 A1, WO 2004/081236 A1 oder WO 2008/067578 A1 offenbart.

Im Sinne der Erfindung wird als Prozessfluid zur Verwendung in der Erdkruste jedes Fluid verstanden, das in einem Prozess in der Erdkruste verwendet wird. Vorzugsweise ist dies ein großtechnischer Prozess, was sich in der Anforderung niederschlägt, große Mengen des Prozessfluids (z.B. Millionen von Litern) wirtschaftlich bereitzustellen. Das Prozessfluid kann beispielsweise eine Flüssigkeit, ein Gel oder ein flüssiger Schaum sein. Das Prozessfluid umfasst Wasser. Bevorzugt ist das Prozessfluid eine Flüssigkeit oder ein Gel.

Weiters ist bevorzugt, dass der Biostabilisator des Prozessfluids, insbesondere in Wasser bzw. im wasserbeinhaltenden Teil des Prozessfluids, gelöst ist - der Biostabilisator kann beispielsweise aber auch, ganz oder teilweise, in Suspension oder Emulsion im Prozessfluid vorliegen.

Unter einem Biostabilisator wird ein Stoff verstanden, der das Wachstum (insbesondere die Vermehrung) und/oder den Stoffwechsel von Mikroorganismen wie Bakterien, Archaeen oder Pilzzellen verlangsamen oder hemmen kann. Im Gegensatz dazu wird unter einem Biozid ein Stoff verstanden, der Mikroorganismen abtötet. In dieser Hinsicht wirkt ein Biozid aggressiver als ein Biostabilisator. Für den Fachmann ist evident, dass ein Biostabilisator unter besonderen Umständen auch als Biozid wirken kann (z.B. bei hoher Dosierung, bei sehr anfälligen Mikroorganismen usw.).

Die biostabilisierende Wirkung einer Substanz lässt sich auf viele verschiedene Arten messen, die im Stand der Technik bekannt sind. Unter anderem mit Methoden, wie sie in den hierin zitierten Dokumenten offenbart sind. Bevorzugte Methoden zur Bestimmung der biostabilisierenden Wirkung sind Microdilution-Test, Tüpfeltest oder Well Diffusion Test. Ebenso sind in White et al. oder in Jorgensen und Ferraro offenbarte Methoden bevorzugt.

Für die Messung der biostabilisierenden Wirkung wird die Substanz oft bis zu einer oder mehreren bestimmten Konzentrationen (z.B. 0,1 ppm, 0,5 ppm, 1 ppm, 5 ppm, 10 ppm, 25 ppm, 50 ppm, 100 ppm, 200 ppm, 300 ppm, 400 ppm, 500 pm, 1000 ppm, 5000 ppm, 10000 ppm) zu einer Probe zugegeben, wobei die Probe den lebenden unerwünschten Mikroorganismus umfasst und beispielsweise eine Reinkultur, Mischkultur, eine aus der Erdkruste gezogene Probe oder eine Probe sein kann, die einer aus der Erdkruste gezogenen Probe ähnlich ist (z.B. Klärschlamm). Dann kann die biostabilisierende Wirkung der Substanz bestimmt werden, indem die Probe mit der Substanz nach einer oder mehreren bestimmten Zeiten (z.B. 1 d, 2 d, 3 d, 4 d, 5 d, 10 d, 20 d, 30 d, 60 d, 90 d, 120 d) mit sich selbst zum Anfangszeitpunkt und/oder mit einer Kontrolle (die Probe ohne die Substanz, z.B. mit Wasser anstelle der Substanz) verglichen wird. Dieser Vergleich kann ein direkter Vergleich sein, z.B.: Ermitteln der Keimzahl durch Ausplattieren und Bestimmung der KBE/mL (kolonie-bildende Einheiten) oder Messung der Trübung (z.B. Bestimmung der OD600). Dieser Vergleich kann auch ein indirekter Vergleich sein, z.B. die Messung eines unerwünschten Effekts, der durch den unerwünschten Mikroorganismus verursacht werden kann (z.B. Sulfidproduktion, Säureproduktion, Produktion extrazellulärer polymerer Substanzen). Insbesondere bei der Erdöl- oder Erdgasförderung kann die Verringerung der mikrobiellen Sulfidproduktion ein wichtiger Parameter sein, um die Eignung einer Substanz als Biostabilisator festzustellen. Ein Biostabilisator hat bevorzugt einen oder mehrere der genannten Wirkungen bei ausgewählten unerwünschten Mikroorganismen, wie sie hierin genannt sind: Geringere Zunahme der Biomasse als in der Kontrolle, geringere Sulfidproduktion als in der Kontrolle, geringere Säureproduktion als in der Kontrolle, geringere Produktion extrazellulärer polymerer Substanzen als in der Kontrolle, geringere Biofilmproduktion als in der Kontrolle.

Laut Brock Biology of Microorganisms, S. 138, werden die Begriffe mesophil, thermophil, hyperthermophil, halotolerant und halophil wie folgt verstanden:
mesophil: bezieht sich auf einen Mikroorganismus, der zwischen 20°C und 45°C am besten wächst; thermophil: bezieht sich auf einen Mikroorganismus, der zwischen 45°C und 80°C am besten wächst; hyperthermophil: bezieht sich auf einen Mikroorganismus, der bei 80°C und höher am besten wächst; halotolerant: bezieht sich auf einen Mikroorganismus, der bei hohen Salzkonzentrationen (z.B. Massenkonzentration von 25% NaCl) wachsen kann; halophil: bezieht sich auf einen Mikroorganismus, der hohe Salzkonzentrationen (z.B. eine Massenkonzentration von 25% NaCl) zum Wachstum benötigt.

Die vorliegende Erfindung wird anhand der nachfolgenden Figuren und Beispiele, auf die sie selbstverständlich nicht eingeschränkt ist, näher erläutert.

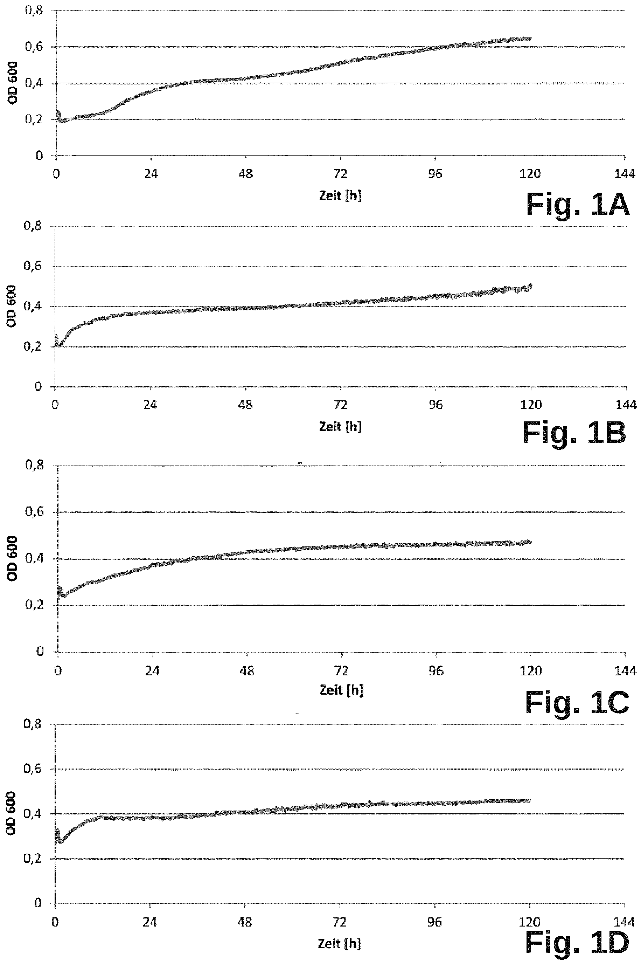

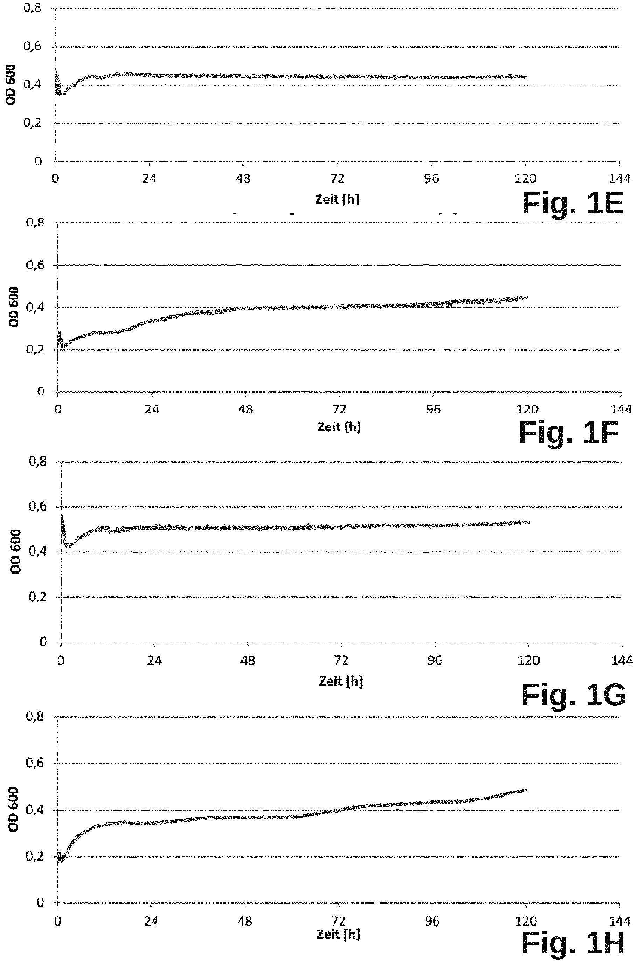

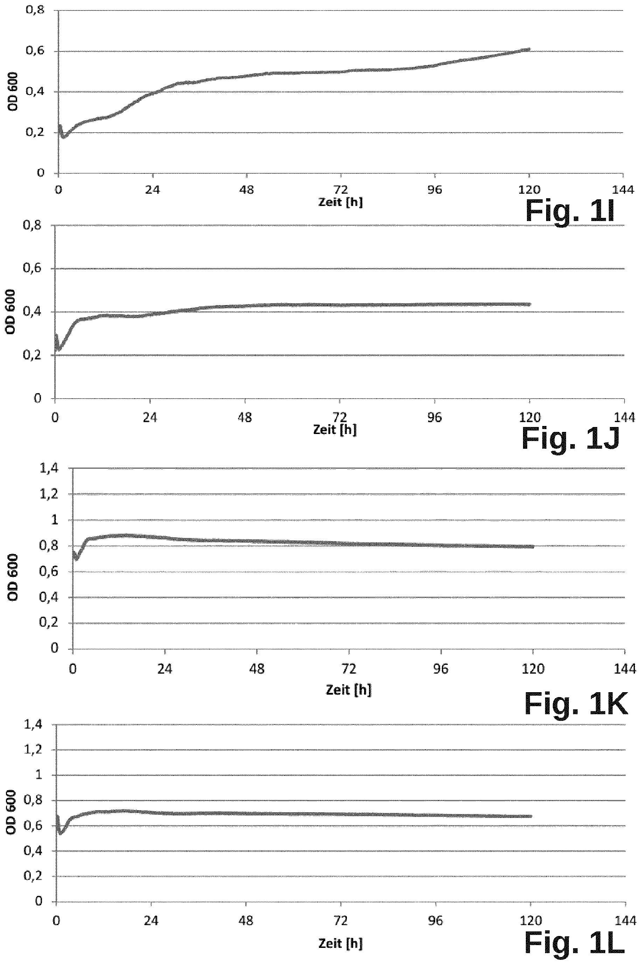

Figuren 1A-1M: Wirkung des Biostabilisators auf *Halanaerobium congolense.* Der Stamm DSM 11287 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.
Figuren 2A-2M: Wirkung des Biostabilisators auf *Halolactibacillus miurensis.* Der Stamm DSM 17074 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.

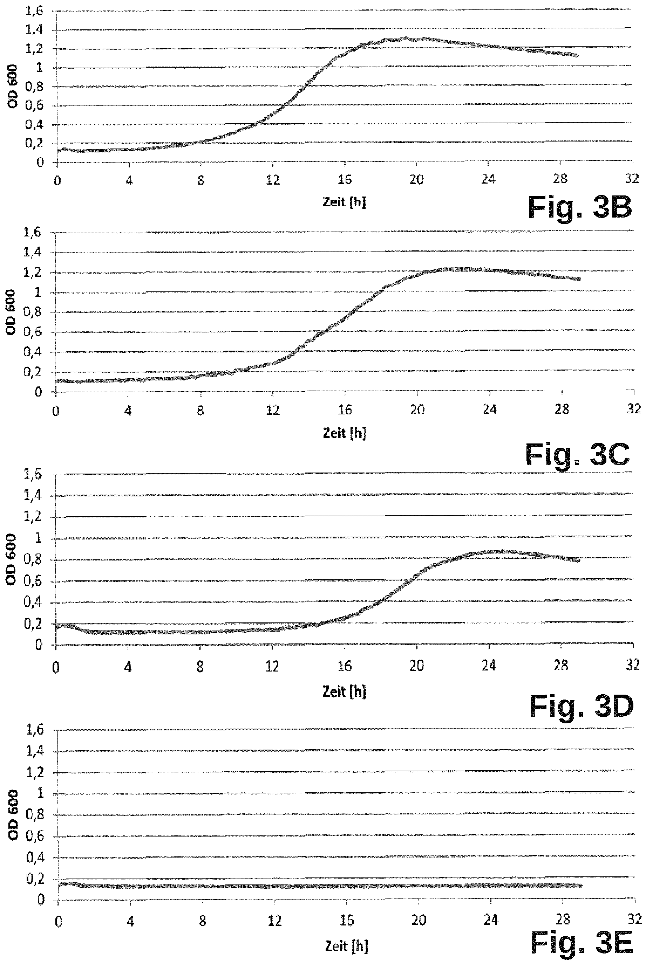

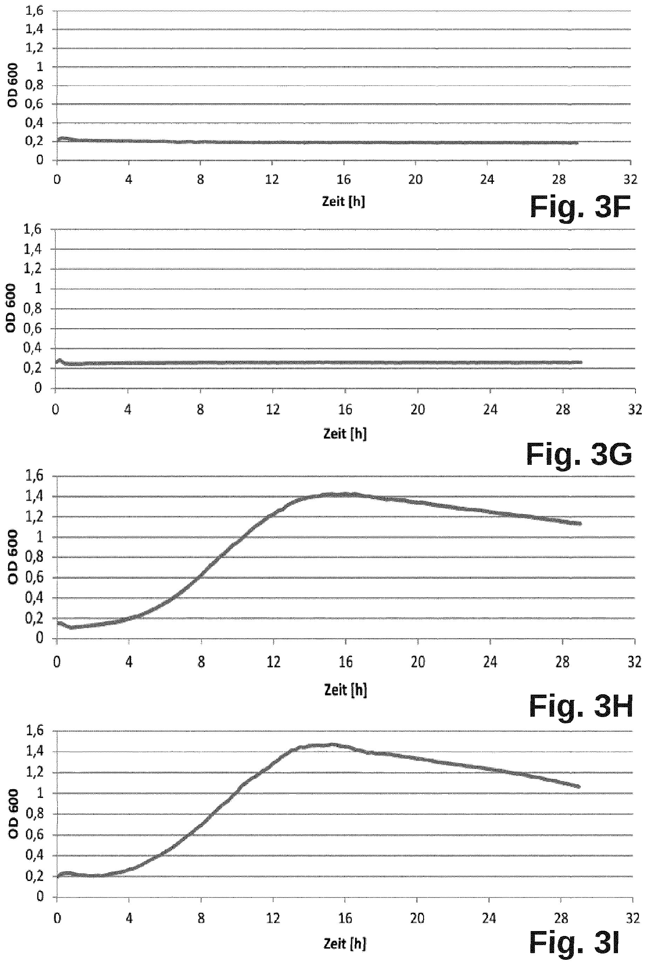

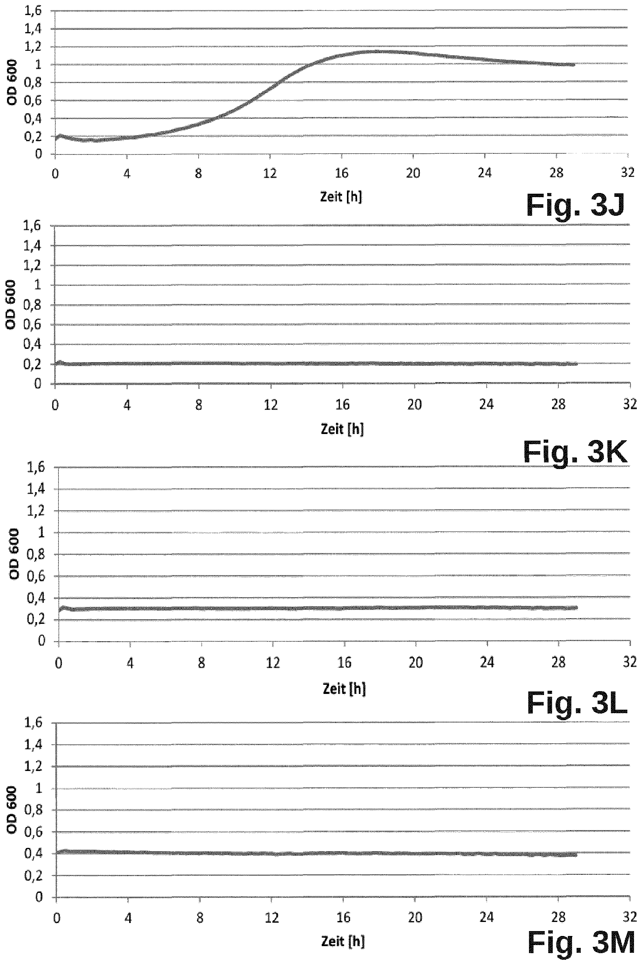

Figuren 3A-3M: Wirkung des Biostabilisators auf *Halolactibacillus halophilus.* Der Stamm DSM 17073 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.

### Beispiele

### Beispiel 1

### Herstellung des Prozessfluids zur Verwendung im Hydraulic Fracturing

Für eine Bohrung werden 560000 kg Prozessfluid mit Biostabilisator (als Fracfluid) bereitgestellt:
Zu 390000 Litern Wasser werden die folgenden Stoffe hinzugefügt: Hopfensäureextrakt (28 kg einer 10%igen alkalischen Hopfensäurelösung für eine Konzentration von 5 mg/kg Hopfensäuren), Kolophonium- und Myristinsäureextrakt (140 kg einer 20%igen alkalischen 50:50 Kolophonium- und Myristinsäurelösung für eine Konzentration von 25 mg/kg Harzsäuren und 25 mg/kg Myristinsäure) und 165000 kg gesintertes Bauxit als Stützmittel.

Ferner werden die folgenden Stoffe hinzugefügt: 200 kg Natriumthiosulfat, 250 kg Natriumhydrogencarbonat, 300 kg Cholinchlorid, 75 kg Diammoniumperoxodisulfat, 200 kg Natriumbromat, 100 kg Zirconylchlorid, 3900 kg Stärkederivat.

### Beispiel 2

### Biostabilisierende Wirkung auf Halanaerobium

Zubereitung des Wachstumsmediums:
Spurenelemente-Stammlösung: Nitrilotriessigsäure 1,50 g in 1L destilliertem Wasser aufnehmen, pH auf 6,5 mit KOH einstellen. Dann zugeben: MgSO₄ x 7 H₂O 3 g, MnSO₄ x H₂O 0,50 g, NaCl 1 g, FeSO₄ x 7 H₂O 0,10 g, CoSO₄ x 7 H₂O 0,18 g, CaCl₂ x 2 H₂O 0,10 g, ZnSO₄ x 7 H₂O 0,18 g, CuSO₄ x 5 H₂O 0,01 g, KAl(SO₄)2 x 12 H₂O 0,02 g, H₃BO₃ 0,01 g, Na₂MoO₄ x 2 H₂O 0,01 g, NiCl₂ x 6 H₂O 0,03 g, Na₂SeCO₃ x 5 H₂O 0,30 mg und Na₂WO₄ x 2 H₂O 0,40 mg. pH mit KOH auf 7 einstellen.

Mediumgrundlage: NH₄Cl 1 g, K₂HPO₄ 0,3 g, KH₂PO₄ 0,3 g, MgCl₂ x 6 H₂O 10 g, CaCl₂ x 2 H₂O 0,1 g, KCl 1 g, Na-Acetat 0,5 g, Cystein 0,5 g, Trypticase 1 g, Hefeextrakt 1 g, NaCl 100 g, Spurenelemente-Stammlösung 1 mL und Resazurin 0,001 g in 1L destilliertem Wasser aufnehmen.

Die Mediumgrundlage abkochen, unter N₂:CO₂ (80:20 v/v) abkühlen. Unter N₂:CO₂ (80:20 v/v) in Kulturröhrchen aliquotieren und autoklavieren. Zur sterilen Mediumgrundlage folgende sterile Stammlösungen auf die in Klammer angegebenen Konzentrationen zugeben: 2% Na₂S x 9 H₂O (0.2 mL/10 mL), 10% NaHCO₃ (0.2 mL/10 mL), 1M Glucose (0.2 mL/10 mL) and 1M Natriumthiosulfat (0.2 mL/10 mL). pH gegebenenfalls auf 7 einstellen. So wird das Wachstumsmedium erhalten.

*Halanaerobium congolense* (DSM 11287) wird von der Deutschen Sammlung von Mikroorganismen und Zellkulturen (DSMZ) bezogen. Bei 42°C unter anaeroben Bedingungen im Wachstumsmedium eine Vorkultur heranziehen, wobei für 7 Tage inkubiert wird.

5 Kulturröhrchen (R0-R4) mit je 2mL Wachstumsmedium bereitstellen, wobei dem Wachstumsmedium im jeweiligen Kulturröhrchen Biostabilisator (in Form von Hopfenextrakt, Kolophonium in Kaliumsalzlösung und Myristinsäure in Kaliumsalzlösung) bis zu den folgenden Konzentrationen beigefügt wird:

| Röhrchen | Hopfensäuren [ppm] | Harzsäuren [ppm] | Myristinsäure [ppm] |
|---|---|---|---|
| R0 | 0 | 0 | 0 |
| R1 | 5 | 25 | 25 |
| R2 | 20 | 100 | 100 |
| R3 | 100 | 500 | 500 |
| R4 | 200 | 1000 | 1000 |

Die Röhrchen mit jeweils 20 µL Vorkultur beimpfen und nach 1, 2, 3 und 4 Tagen Inkubation bei den oben genannten Wachstumsbedingungen die optische Dichte (OD) bestimmen. Es zeigt sich eine geringere optische Dichte im Vergleich zu R0, wobei die Dichte-Differenz zu R0 mit höherer Biostabilisator-Konzentration zunimmt. Zusätzlich kann noch die Menge an jeweils produziertem H₂S bestimmt werden.

### Beispiel 3

### Biostabilisierende Wirkung auf Halolactibacillus

Zubereitung des Wachstumsmediums:
Pepton 5 g, Hefeextrakt 5 g, Glucose 10 g, KH₂PO₄ 1 g, MgSO₄ x 7 H₂O 0,2 g, NaCl 40 g, Na₂CO₃ 10 g in 1L destilliertem Wasser aufnehmen. pH gegebenenfalls auf 9,6 einstellen.

*Halolactibacillus halophilus* (DSM 17073) wird von der Deutschen Sammlung von Mikroorganismen und Zellkulturen (DSMZ) bezogen. Bei 30°C im Wachstumsmedium eine Vorkultur heranziehen, wobei für 3 Tage inkubiert wird.

5 Kulturröhrchen (R0-R4) mit je 2 mL Wachstumsmedium bereitstellen, wobei dem Wachstumsmedium im jeweiligen Kulturröhrchen Biostabilisator (in Form von Hopfenextrakt, Kolophonium in Kaliumsalzlösung und Myristinsäure in Kaliumsalzlösung) bis zu den folgenden Konzentrationen beigefügt wird:

| Röhrchen | Hopfensäuren [ppm] | Harzsäuren [ppm] | Myristinsäure [ppm] |
|---|---|---|---|
| R0 | 0 | 0 | 0 |
| R1 | 5 | 25 | 25 |
| R2 | 20 | 100 | 100 |
| R3 | 100 | 500 | 500 |
| R4 | 200 | 1000 | 1000 |

Die Röhrchen mit jeweils 20 µL Vorkultur beimpfen und nach 1, 2, 3 und 4 Tagen Inkubation bei den oben genannten Wachstumsbedingungen die optische Dichte bestimmen. Es zeigt sich eine geringere optische Dichte im Vergleich zu R0, wobei die Dichte-Differenz zu R0 mit höherer Biostabilisator-Konzentration zunimmt.

### Beispiel 4

### Biostabilisierende Wirkung auf Halanaerobium und Halolactibacillus

Die Wirkung ausgewählter Biostabilisatoren (Hopfen-β-Säuren bzw. Harzsäuren/Myristinsäure, Biostabilisator A bzw. B) auf das Wachstum von drei definierten Bakterienstämmen (*Halanerobium congolense* DSM 11287, *Halolactibacillus halophilus* DSM 17073, *Halolactibacillus miurensis* DSM 17074) wurde mittels eines invitro Versuches analysiert.

Folgende wässrige Stammlösungen für die ausgewählten Biostabilisatoren wurden verwendet: (A) 10%ige alkalische β-Hopfensäurelösung (Hopfenextrakt) und (B) 20%ige alkalische Lösung von Harzsäuren (Kolophonium) und Myristinsäure (60:40).

**Tabelle 1 - Kultivierungsbedingungen**

| **Stamm** | **Wachstumsmedium** | **Umweltbedingungen** |
|---|---|---|
| *Halanaerobium congolense* DSM 11287 | DSMZ Medium Nr. 933 (wie in Beispiel 2) | 3 Tage, anaerob, 42°C |
| *Halolactibacillus miurenis* DSM 17074 | DSMZ Medium Nr. 785 (wie in Beispiel 3) | 48 h, mikroaerophil, 30°C |
| *Halolactibacillus halophilus* DSM 17073 | DSMZ Medium Nr. 785 (wie in Beispiel 3) | 48 h, mikroaerophil, 30°C |

Jeder der drei Teststämme wurde einige Tage vor den Biostabilisierungsversuchen gemäß Tabelle 1 angezüchtet. Die Speziesidentität wurde per Sequenzierung und Sequenzvergleich in öffentlichen Datenbanken noch einmal überprüft.

Die Biostabilisierungsversuche wurden mit dem Bioscreen-Gerät durchgeführt. Es handelt sich dabei um ein spezielles Mikrotiterplattenphotometer, welches gleichzeitig als Inkubator dient und bis zu zwei sogenannte Honeycomb-Mikrotiterplatten mit je 100 Wells gleichzeitig aufnehmen kann. Die Bestimmung des Wachstums erfolgt über eine OD-Messung bei 600 nm. Während der Inkubation wurden die Honeycomb-Mikrotiterplatten alle 15 sec vor der jeweiligen Messung mit mittlerer Stärke für 5 sec geschüttelt. Die OD-Messung erfolgte alle 15 min.

Bei jedem der durchgeführten Versuche wurden pro Teststamm zwei Honeycomb-Mikrotiterplatten verwendet, welche jeweils nach demselben Schema befüllt wurden. Auf der jeweils ersten Mikrotiterplatte wurde dabei der Biostabilisator A und auf der jeweils zweiten Platte der Biostabilisator B in den Konzentrationen 0,5 ppm, 1 ppm, 10 ppm, 50 ppm, 100 ppm und 250 ppm getestet. Die Konzentrationsangaben in ppm in diesem Beispiel beziehen sich auf die Endkonzentration an Hopfensäuren im Wachstumsmedium (für A) bzw. auf die Endkonzentration an Harzsäuren/Myristinsäure im Wachstumsmedium (in der Zusammensetzung 60:40, für B). "ppm" steht in diesem Beispiel für mg der organischen Säuren (d.h. Hopfensäuren bzw. Harzsäuren/Myristinsäure) pro kg der Lösung (d.h. Wachstumsmedium + Zusätze).

Alle Teststämme wurden bei jeder angeführten Biostabilisatorkonzentration siebenfach getestet (d.h. n=7). Dazu wurde die jeweiligen Biostabilisatorkonzentrationen mit dem jeweiligen Bakterienstamm in sieben Wells der Honeycomb-Mikrotiterplatte parallel untersucht. Zusätzlich wurden drei Wells pro Biostabilisatorkonzentration als Kontrolle mitgeführt d.h. anstelle der Bakteriensuspension wurde steriles Wasser in die Wells pipettiert. Daneben wurden zur weiteren Kontrolle auf jeder Platte sieben Wells ohne Biostabilisator mitgeführt, um das typische Wachstum des jeweiligen Stammes unter den gewählten Testbedingungen zu erfassen. Die Sterilitätskontrolle umfasste jeweils weitere drei Wells pro Biostabilisator und Bakterienstamm (Medium ohne Biostabilisator und ohne Bakteriensuspension).

In jedes Well wurde das jeweilige Wachstumsmedium gemäß Tabelle 1, Bakteriensuspension (bzw. steriles Wasser bei den entsprechenden Kontrollen) und die Biostabilisatorlösung in der entsprechenden Konzentration pipettiert. Um eine strikt anaerobe Atmosphäre für *Halanaerobium congolense* zu schaffen, wurde das Wachstumsmedium mit Oxyrase (Sauerstoff-entfernendes Enzym) versetzt. Durch Mischung aller Komponenten wurden die jeweils gewünschten Biostabilisatorkonzentrationen erreicht. Anschließend wurden alle Wells mit 2 - 3 Tropfen sterilem Paraffinöl überschichtet. Dies diente der Erhaltung der anaeroben Bedingungen bei *Halanaerobium congolense* und der Schaffung mikroaerophiler Verhältnisse für *Halolactibacillus miurensis* und *Halolactibacillus halophilus.*
Zusammensetzung des jeweiligen Volumens in den Wells der Mikrotiterplatte (für *Halanaerobium congolense)*
300 µL 1,25x Wachstumsmedium (DSMZ Nr. 933)
50 µL Bakteriensuspension
10 µL Oxyrase® (Oxyrase Inc., Ohio, USA)
10 µL Biostabilisatorlösung entsprechender Konzentration
2 - 3 Tropfen Paraffin zum Überschichten
Zusammensetzung des jeweiligen Volumens in den Wells der Mikrotiterplatte (für die anderen drei Stämme)
300 µL 1,25x Wachstumsmedium (DSMZ Nr. 785 bzw. CASO)
50 µL Bakteriensuspension
10 µL µL Biostabilisatorlösung entsprechender Konzentration
2 - 3 Tropfen Paraffin zum Überschichten

Die jeweiligen Wachstumskurven sind in den Figuren dargestellt und zeigen eine starke, konzentrationsabhängige Beeinflussung des Wachstums der Teststämme durch die Biostabilisatoren. Bei höheren Konzentrationen der Biostabilisatoren kommt es zur Eintrübung des Wachstumsmediums (d.h. höherer Anfangs-OD-Wert - für die Bewertung der biostabilisierenden Wirkung relevant ist jedoch nicht der Anfangs-OD-Wert, sondern der Verlauf der Wachstumskurve bzw. der OD-Zugewinn) und vereinzelt zu Ausreißern (weil der Biostabilisator mitunter aus der Lösung ausfällt), wobei der dosisabhängige Trend zur Biostabilisierung dennoch klar aus den Figuren erkennbar ist.

In den meisten getesteten Biostabilisator-Teststamm Kombinationen bewirkt bereits eine Konzentration von 0,5 ppm eine Beeinflussung des Wachstums (geringerer OD-Zugewinn bzw. verzögertes Erreichen der maximalen OD). Eine vollständige Hemmung des Wachstums (d.h. es findet kein die OD steigerndes Wachstum mehr statt) trat stammindividuell meist bei 10 ppm bzw. 50 ppm Biostabilisatorkonzentration auf (vgl. Tabelle 2).

Unter den Testbedingungen waren die Biostabilisatoren A und B in der Lage, das Wachstum der getesteten Bakterien zu hemmen, d.h. biostabilisierend zu wirken.

**Tabelle 2 - Biostabilisatormindestkonzentration für vollständige Wachstumshemmung. A: Hopfensäuren, B: Harzsäuren/Myristinsäure (60:40)**

| **Stamm** | **Biostabilisator A [ppm]** | **Biostabilisator B [ppm]** |
|---|---|---|
| *Halanaerobium congolense* DSM 11287 | 10 | 100 |
| *Halolactibacillus miurenis* DSM 17074 | 50 | 10 |
| *Halolactibacillus halophilus* DSM 17073 | 1 | 250 |

### Beispiel 5A

### Herstellung des Prozessfluids als Bohrspülung für eine geothermische Bohrung

Für eine geothermische Bohrung wurden 750.000 L Prozessfluid mit Biostabilisator als Bohrspülung bereitgestellt:
Zu 720.000 L Wasser wurden die folgenden Stoffe hinzugefügt: Hopfensäureextrakt als Biostabilisator (700 kg einer 10%igen alkalischen Hopfensäurelösung für eine Hopfensäure-Konzentration von 1 g/L). 61.000 kg Kaliumcarbonat zur Inhibierung von erbohrten Feststoffen; 18.000 kg polyanionische Cellulose (PAC) und 2.250 kg Xanthan.

Ferner wurden die folgenden Stoffe hinzugefügt: 4.000 kg Zitronensäure, 1.500 kg Soda, 3.000 kg Bentonit, und 720 L Entschäumer auf Fettalkoholoxylat-Basis.

### Beispiel 5B

### Erfindungsgemäße Verwendung des Prozessfluids zur Bohrspülung bei einer geothermischen Bohrung

Bei Anwendung einer Bohrspülung mit Biostabilisator gemäß Beispiel 5A bei einer geothermischen Bohrung in einer Bohrtiefe von 750 - 3.200 m konnte die mikrobiologische Belastung signifikant reduziert werden und die nachteiligen Auswirkungen wie Geruchsentwicklung, Viskositätsänderung der Bohrspülung oder Abbau von Xanthan verhindert werden.

Die mikrobiologischen Untersuchungen wurden auf Platecount-Agar durch Ausstreichen von 100 µL Bohrspülprobe und zwei Tage Bebrütung bei 37°C durchgeführt (mikrobiologische Belastung wird in KbE = koloniebildende Einheiten pro mL Bohrspülung angegeben) :
- Tag 1 Beginn des zweiten Bohrungsabschnitts (750 m Tiefe). Bohrspülung gemäß Beispiel 5A, jedoch ohne Biostabilisator und Entschäumer kam zum Einsatz
- Tag 11 Probenentnahme aus Bohrspülung - Bakterienwachstum überwucherte Agar, KbE daher nicht genau zu ermitteln, aber sicher weit mehr als 3000. Unter anderem war in der Probe ein signifikanter Anteil an Bakterien der Gattungen *Microbacterium* und *Dietzia* vorhanden, wie durch Sequenzierung festgestellt wurde. Die Bohrspülung gemäß Beispiel 5A mit Biostabilisator jedoch ohne Entschäumer wurde nun eingesetzt. Unerwarteterweise zeigte sich, dass der Einsatz eines Entschäumers vorteilhaft war, so dass nach kurzer Zeit die Bohrspülung gemäß Beispiel 5A (also mit Biostabilisator und Entschäumer) zum Einsatz kam.

| | |
|---|---|
| -Tag 18 | > 300 KbE/mL |
| -Tag 21 | 93 KbE/mL |
| -Tag 29 | 13 KbE/mL |
| -Tag 37 | 14 KbE/mL |
| -Tag 43 | 19 KbE/mL |
| -Tag 50 | 18 KbE/mL |
| -Tag 61 | Ende der Bohrung |

Somit hat sich überraschenderweise herausgestellt, dass das Prozessfluid mit Biostabilisator auch als Bohrspülung in einer geothermischen Bohrung effektiv ist, insbesondere auch gegen Bakterien der Gattungen *Microbacterium* und *Dietzia.*

Zitierte Nicht-Patent-Literatur:
Ashraf et al. "Green biocides, a promising technology: current and future applications to industry and industrial processes." Journal of the Science of Food and Agriculture 94.3 (2014): 388-403
Cluff, Maryam A., et al. "Temporal Changes in Microbial Ecology and Geochemistry in Produced Water from Hydraulically Fractured Marcellus Shale Gas Wells." Environmental science & technology (2014)
Emerstorfer, Kneifel and Hein, "The role of plant-based antimicrobials in food and feed production with special regard to silage fermentation", Die Bodenkultur - Journal for Land Management, Food and Environment (2009), vol. 60, issue 3
Jorgensen and Ferraro, "Antimicrobial susceptibility testing: general principles and contemporary practices", Clinical Infectious Diseases 26, 973-980 (1998).
White, et al. "Antimicrobial resistance: standardisation and harmonisation of laboratory methodologies for the detection and quantification of antimicrobial resistance" Rev. sci. tech. Off. int. Epiz. 20 (3), 849-858 (2001).
Madigan et al. "Brock Biology of Microorganisms", 10. Ausgabe (2003), insbesondere S. 138
Mohan, Arvind, et al. "Microbial community changes in hydraulic fracturing fluids and produced water from shale gas extraction." Environmental science & technology 47.22 (2013): 13141-13150.
Mohan, Arvind, et al. "The Functional Potential of Microbial Communities in Hydraulic Fracturing Source Water and Produced Water from Natural Gas Extraction Characterized by Metagenomic Sequencing." PloS one 9.10 (2014): e107682.
Ravot, Gilles, et al. "Haloanaerobium congolense sp. nov., an anaerobic, moderately halophilic, thiosulfate and sulfur reducing bacterium from an African oil field." FEMS microbiology letters 147.1 (1997): 81-88.
[Struchtemeyer 2012] Struchtemeyer, Christopher G., Michael D. Morrison, and Mostafa S. Elshahed. "A critical assessment of the efficacy of biocides used during the hydraulic fracturing process in shale natural gas wells." International Biodeterioration & Biodegradation 71 (2012): 15-21.
[Struchtemeyer 2012b] Struchtemeyer, Christopher G., and Mostafa S. Elshahed. "Bacterial communities associated with hydraulic fracturing fluids in thermogenic natural gas wells in North Central Texas, USA." FEMS microbiology ecology 81.1 (2012): 13-25.
Ullmann's Encyclopedia of Industrial Chemistry, Vol. A 23 (1993), S. 73-88.
Wang, Jifu, et al. "Robust antimicrobial compounds and polymers derived from natural resin acids." Chemical Communications 48.6 (2012): 916-918.

## Patentansprüche

1. Verfahren zur Biostabilisierung in der Erdkruste im Hydraulic Fracturing, umfassend das Pumpen eines Prozessfluids in die Erdkruste, vorzugsweise umfassend den direkten Kontakt des Prozessfluids mit der Erdkruste; wobei ein unerwünschter Mikroorganismus, der ein Bakterium bevorzugt ausgewählt aus der Abteilung der Firmicutes, Actinobacteria, Bacteroidetes oder Proteobacteria ist, im Wachstum und/oder im Stoffwechsel gehemmt wird; wobei das Prozessfluid ein Prozessfluid auf Wasserbasis zur Verwendung in der Erdkruste im Hydraulic Fracturing, umfassend einen Proppant und einen Biostabilisator, ist, wobei der Biostabilisator ein Gemisch aus zumindest einer Harzsäure, oder einem Salz, Alkohol oder Aldehyd davon, und zumindest einer Fettsäure, oder einem Salz, Alkohol oder Aldehyd davon, umfasst, wobei die Fettsäure ausgewählt ist aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure, wobei die Gesamtkonzentration der Harzsäuren im Prozessfluid 0,05 ppm bis 5000 ppm beträgt und die Gesamtkonzentration der Fettsäuren im Prozessfluid 0,05 ppm bis 5000 ppm beträgt.

2. Verfahren gemäß Anspruch 1, **dadurch gekennzeichnet, dass** das Prozessfluid ferner zumindest einen Stoff umfasst, der ausgewählt ist aus der Gruppe bestehend aus Gelbildnern, Tonstabilisatoren, Reibungsminderern, Kettenbrechern, Vernetzern und Puffermitteln.

3. Verfahren gemäß Anspruch 2, **dadurch gekennzeichnet, dass** das Prozessfluid ferner zumindest einen Gelbildner enthält, wobei der Gelbildner ein Biopolymer oder ein polymeres Derivat davon ist;
vorzugsweise wobei das Biopolymer ein Polysaccharid, bevorzugt eine Stärke, ein Pflanzengummi oder ein Pektin, insbesondere eine Stärke, ist.

4. Verfahren gemäß einem der Ansprüche 1 bis 3, **dadurch gekennzeichnet, dass** das Prozessfluid ferner einen Wasserenthärter umfasst.

5. Verfahren gemäß einem der Ansprüche 1 bis 4, **dadurch gekennzeichnet, dass** der Biostabilisator ferner eine Hopfensäure, oder ein Salz, Alkohol oder Aldehyd davon, umfasst, vorzugsweise wobei die Hopfensäure eine alpha-Hopfensäure ist, ausgewählt aus der Gruppe bestehend aus Humulon, Isohumulon, Cohumulon, Adhumulon, Prähumulon, Posthumulon, Tetrahydroisohumulon und Tetrahydrodeoxyhumulon, oder eine beta-Hopfensäure ist, ausgewählt aus der Gruppe bestehend aus Lupulon, Colupulon, Adlupulon, Prälupulon, Postlupulon, Hexahydrocolupulon und Hexahydrolupulon.

6. Verfahren gemäß einem der Ansprüche 1 bis 5, **dadurch gekennzeichnet, dass** der Biostabilisator ein Gemisch ist aus mindestens den folgenden Bestandteilen b) und c), insbesondere den folgenden Bestandteilen a), b) und c):
a) Hopfenextrakt,
b) natürliches Harz, bevorzugt Kolophonium, wobei das natürliche Harz vorzugsweise in gelöster Form zugegeben ist, und
c) Myristinsäure oder einem Salz davon.

7. Verfahren gemäß einem der Ansprüche 1 bis 6, wobei der Biostabilisator **dadurch gekennzeichnet** ist, die Harzsäure ausgewählt ist aus der Gruppe bestehend aus Pimarsäure, Neoabietinsäure, Abietinsäure, Dehydroabietinsäure, Levopimarsäure und Palustrinsäure.

8. Verfahren gemäß einem der Ansprüche 1 bis 7, **dadurch gekennzeichnet, dass** das Prozessfluid ferner mindestens einen weiteren antimikrobiellen Wirkstoff und/oder Biostabilisator beinhaltet, vorzugsweise ausgewählt aus Essigsäure, Milchsäure, Propionsäure, Benzoesäure, Sorbinsäure, Ameisensäure, und Salzen davon.

## Claims

1. Method for biostabilisation in the earth's crust in hydraulic fracturing, comprising pumping a process fluid into the earth's crust, preferably comprising direct contact of the process fluid with the earth's crust, wherein an undesired microorganism, which is a bacterium preferably selected from the division of firmicutes, actinobacteria, Bacteroidetes or proteobacteria, is inhibited with respect to growth and/or metabolism, wherein the process fluid is a process fluid based on water for use in the earth's crust in hydraulic fracturing, comprising a proppant and a biostabiliser, wherein the biostabiliser is a mixture of at least one resin acid, or a salt, alcohol or aldehyde thereof, and at least one fatty acid, or a salt, alcohol or aldehyde thereof, wherein the fatty acid is selected from the group consisting of capric acid, undecylenic acid, lauric acid, myristic acid, palmitic acid, margaric acid, stearic acid, arachidic acid, behenic acid, lignoceric acid, cerotic acid, palmitoleic acid, oleic acid, elaidic acid, vaccenic acid, icosenoic acid, cetoleic acid, erucic acid, nervonic acid, linoleic acid, linolenic acid, arachidonic acid, eicosapentaenoic acid, clupanodonic acid and docosahexaenoic acid, wherein the total concentration of the resin acids in the process fluid is 0.05 ppm to 5000 ppm and the total concentration of the fatty acids in the process fluid is 0.05 ppm to 5000 ppm.

2. Method according to claim 1, **characterised in that** the process fluid further comprises at least one substance that is selected from the group consisting of gelling agents, clay stabilisers, antifriction means, chain breakers, cross-linking agents and buffering agents.

3. Method according to claim 2, **characterised in that** the process fluid further comprises at least one gelling agent, the gelling agent being a biopolymer or a polymeric derivative thereof; preferably the biopolymer being a polysaccharide, preferably a starch, a gum or a pectin, in particular a starch.

4. Method according to any of claims 1 to 3, **characterised in that** the process fluid further comprises a water softener.

5. Method according to any of claims 1 to 4, **characterised in that** the biostabiliser further comprises a hop acid, or a salt, alcohol or aldehyde thereof, preferably the hop acid being an alpha hop acid, selected from the group consisting of humulone, isohumulone, cohumulone, adhumulone, prehumulone, posthumulone, tetrahydroisohumulone and tetrahydrodeoxyhumulone, or a beta hop acid, selected from the group consisting of lupulone, colupulone, adlupulone, prelupulone, postlupulone, hexahydrocolupulone and hexahydrolupulone.

6. Method according to any of claims 1 to 5, **characterised in that** the biostabiliser is a mixture of at least the following components b) and c), in particular the following components a), b) and c):
a) hop extract,
b) natural resin, preferably colophonium, the natural resin being added preferably in a dissolved form, and
c) myristic acid or a salt thereof.

7. Method according to any of claims 1 to 6, the biostabiliser being **characterised in that** the resin acid is selected from the group consisting of pimaric acid, neoabietic acid, abietic acid, dehydroabietic acid, levopimaric acid and palustric acid.

8. Method according to any of claims 1 to 7, **characterised in that** the process fluid further comprises at least one additional antimicrobial active substance and/or biostabiliser, preferably selected from acetic acid, lactic acid, propionic acid, benzoic acid, sorbic acid, formic acid, and salts thereof.

## Revendications

1. Procédé de biostabilisation dans la croûte terrestre en fracturation hydraulique, comprenant le pompage d'un fluide de procédé dans la croûte terrestre, comprenant de préférence la mise en contact direct du fluide de procédé avec la croûte terrestre ; dans lequel on empêche la prolifération et/ou le métabolisme d'un microorganisme indésirable, qui est une bactérie de préférence choisie dans le groupe des Firmicutes, des Actinobacteria, des Bacteroidetes ou des Proteobacteria ; le fluide de procédé étant un fluide de procédé à base d'eau pour utilisation dans la croûte terrestre en fracturation hydraulique, comprenant un agent de soutènement et un biostabilisant, le biostabilisant étant un mélange d'au moins un acide résinique, ou d'un sel, d'un alcool ou d'un aldéhyde de ce dernier, et d'au moins un acide gras, ou d'un sel, d'un alcool ou d'un aldéhyde de ce dernier, l'acide gras étant choisi dans le groupe consistant en l'acide caprique, l'acide undécylénique, l'acide laurique, l'acide myristique, l'acide palmitique, l'acide margarique, l'acide stéarique, l'acide arachidique, l'acide béhénique, l'acide lignocérique, l'acide cérotique, l'acide palmitoléique, l'acide oléique, l'acide élaïdique, l'acide vaccénique, l'acide icosénique, l'acide cétoléique, l'acide érucasique, l'acide nervonique, l'acide linoléique, l'acide linolénique, l'acide arachidonique, l'acide timnodonique, l'acide clupanodonique et l'acide cervonique, la concentration totale des acides résiniques dans le fluide de procédé étant de 0,05 ppm à 5000 ppm, et la concentration totale des acides gras dans le fluide de procédé étant de 0,05 ppm à 5000 ppm.

2. Procédé selon la revendication 1, **caractérisé en ce que** le fluide de procédé comprend en outre au moins une substance qui est choisie dans le groupe consistant en les gélifiants, les stabilisants d'argile, les réducteurs de frottement, les rupteurs de chaîne, les agents de réticulation et les substances tampons.

3. Procédé selon la revendication 2, **caractérisé en ce que** le fluide de procédé contient en outre au moins un gélifiant, le gélifiant étant un biopolymère ou un dérivé polymère de ce dernier ; de préférence dans lequel le biopolymère est un polysaccharide, de préférence un amidon, un caoutchouc végétal ou une pectine, en particulier un amidon.

4. Procédé selon l'une des revendications 1 à 3, **caractérisé en ce que** le fluide de procédé comprend en outre un agent adoucisseur d'eau.

5. Procédé selon l'une des revendications 1 à 4, **caractérisé en ce que** le biostabilisant contient en outre un acide de houblon, ou un sel, un alcool ou un aldéhyde de ce dernier, de préférence dans lequel l'acide de houblon est un acide de houblon alpha, choisi dans le groupe consistant en l'humulone, l'isohumulone, la cohumulone, l'adhumulone, la préhumulone, la posthumulone, la tétrahydroisohumulone et la tétrahydrodésoxyhumulone, ou un acide de houblon bêta, choisi dans le groupe consistant en la lupulone, la colupulone, l'adlupulone, la prélupulone, la postlupulone, l'hexahydrocolupulone et l'hexahydrolupulone.

6. Procédé selon l'une des revendications 1 à 5, **caractérisé en ce que** le biostabilisant est un mélange d'au moins les constituants b) et c) ci-après, en particulier des constituants a), b) et c) ci-après :
a) extrait de houblon,
b) résine naturelle, de préférence la colophane, la résine naturelle étant ajoutée de préférence sous forme dissoute, et
c) acide myristique ou un sel de ce dernier.

7. Procédé selon l'une des revendications 1 à 6, dans lequel le biostabilisant est **caractérisé en ce que** l'acide résinique est choisi dans le groupe consistant en l'acide pimarique, l'acide néoabiétique, l'acide abiétique, l'acide déhydroabiétique, l'acide lévopimarique et l'acide palustrique.

8. Procédé selon l'une des revendications 1 à 7, **caractérisé en ce que** le fluide de procédé contient en outre au moins une substance active antimicrobienne et/ou un biostabilisant supplémentaires, de préférence choisis parmi l'acide acétique, l'acide lactique, l'acide propionique, l'acide benzoïque, l'acide sorbique, l'acide formique et les sels de ces derniers.
